(19) **Europäisches Patentamt / European Patent Office / Office européen des brevets**

(11) **EP 4 035 821 A1**

(12) **EUROPEAN PATENT APPLICATION**
published in accordance with Art. 153(4) EPC

(43) Date of publication:
03.08.2022 Bulletin 2022/31

(21) Application number: 20868682.4

(22) Date of filing: 31.08.2020

(51) International Patent Classification (IPC):
*B23K 26/064* (2014.01)    *B23K 26/066* (2014.01)
*B23K 26/082* (2014.01)    *B23K 26/16* (2006.01)

(52) Cooperative Patent Classification (CPC):
**B23K 26/064; B23K 26/066; B23K 26/082;
B23K 26/16**

(86) International application number:
**PCT/JP2020/032821**

(87) International publication number:
**WO 2021/059872 (01.04.2021 Gazette 2021/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 27.09.2019  JP 2019177161

(71) Applicant: **Toyokoh Co., Ltd.**
**Fuji-shi, Shizuoka 417-0047 (JP)**

(72) Inventor: **MORI, Daisuke**
**Fuji-shi, Shizuoka 417-0047 (JP)**

(74) Representative: **Banzer, Hans-Jörg**
**Kraus & Weisert**
**Patentanwälte PartGmbB**
**Thomas-Wimmer-Ring 15**
**80539 München (DE)**

(54) **LASER IRRADIATION DEVICE**

(57)    PROBLEM TO BE SOLVED: To provide a laser irradiation apparatus which suppresses adhesion of foreign matters to an optical element.

SOLUTION: A laser irradiation device 1 includes: emission optical systems 10, 20, 30 which form a beam B in which laser light generated by a laser oscillator converges on a predetermined beam spot BS, and continuously change an irradiation direction or the like of the beam; and a protective member 70 which is arranged between the emission optical system and the beam spot, and protects the emission optical system from foreign matters scattered from an irradiation object side, and the protective member 70 has an aperture 71 through which the beam passes and moves in connection with a change of the irradiation direction or the like of the beam so that the aperture is positioned on a path of the beam.

[FIG. 2]

Irradiation Object Side

EP 4 035 821 A1

**Description**

[Technical field]

The present invention relates to a laser irradiation apparatus for irradiating a laser light to an object to be treated.

[Background of the Invention]

As a prior art related to a surface treatment using a laser light, in Patent document 1, for example, it is described that a wedge prism for deflecting a laser light by a predetermined deflection angle is provided in an irradiation head for irradiating an irradiation object with a laser light, and the wedge prism is irradiated with a laser light while being rotated around an optical axis of incident light, thus an irradiation spot (beam spot) scans a surface of an irradiation object while the spot rotating in an arc shape, and an old paint coating, a foreign matter or the like adhered to the surface of the irradiation object is removed (cleaned).

In addition, Patent Document 2 describes that a rotation drive of the wedge prism is performed by an air motor which converts a gas pressure into a rotational motion, and an exhaust gas of an air motor is introduced into an inside of a duct by which a laser beam is emitted, thereby preventing adhesion of foreign substances to an optical element and an air motor.

[Prior art reference]

[Patent document]

[Patent document 1] Japanese Patent No. 5574354
[Patent document 2] International Publication No. WO2016/009978

[Summary of the invention]

[Problem to be solved by the invention]

Cleaning using a laser beam as described in Patent Document 1 is effective for peeling of an old paint coating adhered to a surface of a metal structure such as steel and removing foreign substances such as rusts formed near the surface.

However, when foreign substances (including a smoke-like substances) such as an old paint coating, rust, a dust, spatters or the like, which is peeled off from an irradiation object by irradiation of laser light and scattered, enter the inside of an irradiation head, and adheres to an optical element such as a protective glass etc., deterioration of optical performance and burnout of an optical element are caused.

As a countermeasure, as described in Patent Document 2, there has been proposed a method in which a gas is introduced into a duct (nozzle) from which a laser beam is emitted, and the gas is ejected from an opening at a tip end, whereby the inside of the nozzle is scavenged (purged) to prevent the intrusion of foreign substances.

However, in the case of the irradiation head for laser cleanings which scans the surface of an irradiation object while deflecting a laser beam, by using the deflection optical system of a revolving wedge prism etc. for example, it is necessary to increase the inner diameter of an opening at the tip of the nozzle to prevent interference with the laser beam, comparing to an irradiation head for welding or cutting for example, which does not significantly deflect and shift the laser beam.

Therefore, it is difficult to prevent the intrusion of foreign substances by the prior art, and there has been a case in which adhesion of foreign substances to an optical element such as a protective glass or the like, and burnout caused thereby occurs.

In view of the above problems, it is an object of the present invention to provide a laser irradiation apparatus which suppresses adhesion of foreign substances to an optical element.

[Means for solving the problem]

The present invention solves the above problems by the following solution.

According to a 1st aspect of the present invention, there is provided a laser irradiation apparatus characterized in that the apparatus comprising, an emission optical system which forms a beam by condensing or converging a laser light generated by a laser oscillator at a predetermined beam spot, and which continuously changes at least one of an irradiation direction and an optical path position of the beam, and a protective member which is provided between the emission optical system and the beam spot, and which suppresses an arrival of foreign substances scattered from the irradiation object side to the emission optical system, and which has an aperture through which the beam passes, and which moves in connection with a change in at least one of an irradiation direction and an optical path position of the beam so that a position of the aperture is positioned on a path of the beam.

Note that, in the present specification and the claims, a state in which a beam is converged indicates a state in which a beam diameter becomes smaller (narrowed) than a state immediately after being emitted from the emission optical system, that is, a state in which an energy density becomes relatively higher than immediately after emission.

Also note that, in the present specification, claims etc., the term "move in connection with" is not limited to a case in which 2 or more elements are simultaneously operated by a single actuator by a mechanical coupling mechanism etc., but also includes a case in which a plurality of elements each having independent actuators are configured so as to move simultaneously in synchronization with one movement.

According to the present invention, by providing a protective member which moves in connection with the change in the irradiation direction of the beam so that the position of the aperture is located on the path of the beam, it is possible to reduce the size of the aperture through which the beam is emitted even in the case of the laser irradiation apparatus which scans the irradiation object while changing the direction of irradiation of the beam or the position of the optical path.

Further, since the position of the aperture sequentially moves in accordance with the change of the irradiation direction of the beam, the aperture has moved from the position at the time of the irradiation during the time when the foreign substances scatter at the irradiation position and the time when they return to the side of the laser irradiation device, so that the foreign substances scattered along the irradiation direction of the beam can be prevented from entering the aperture.

As a result, it is possible to prevent foreign substances scattered from the irradiation object side from entering the optical system, and to prevent deterioration of the irradiation performance and burnout of the optical element caused by adhesion of foreign substances to the optical system.

According to a 2nd aspect of the present invention, there is provided a laser irradiation apparatus according to the 1st aspect, wherein the emission optical system has a rotary optical system which gives at least one of a deflection angle and a shift amount to the beam, and which rotates around a predetermined rotation center axis so as to turn the beam spot, and the protective member is fixed to a holding member which holds the rotary optical system.

According to this configuration, the protective member can move in connection with the rotation of the beam without providing a particular power source or a drive mechanism for driving the protective member, and the configuration of the apparatus can be simplified.

According to a 3rd aspect of the present invention, there is provided a laser irradiation apparatus according to the 2nd aspect, wherein the rotation optical system has a wedge prism which gives a deflection angle to the beam.

According to a 4th aspect of the present invention, there is provided a laser irradiation apparatus according to the 2nd or 3rd aspect, wherein the rotation optical system has a mirror which is arranged so as to be inclined relative to an incident direction of the beam.

According to a 5th aspect of the present invention, there is provided a laser irradiation apparatus according to the 4th aspect, wherein the mirror includes a 1st mirror and a 2nd mirror on which the beam is sequentially reflected.

According to these respective inventions, it is possible, with a simple configuration, to form a beam which is rotated around the rotation center axis in a state with an eccentricity or deflection angle.

According to a 6th aspect of the present invention, there is provided a laser irradiation apparatus according to the 5th aspect, wherein the position of the 2nd mirror in the direction along the optical axis of the beam incident on the irradiation object is located at a far side from the irradiation object than the 1st mirror.

According to this configuration, by bending the beam in a so-called Z-shape, an optical path length through which the beam passes can be increased without excessively enlarging the irradiation device, and a diameter of the beam when passing through the protective member can be narrowed down, and an aperture through which the beam passes can be smaller to enhance the effect of suppressing the intrusion of foreign substances.

According to a 7th aspect of the present invention, there is provided a laser irradiation apparatus according to the 2 to 6 aspects, wherein the protective member has a surface portion formed along a direction intersecting with the rotation center axis, and the aperture is provided on the surface portion.

According to a 8th aspect of the present invention, there is provided a laser irradiation apparatus according to any one of the 2nd to 6th aspects, wherein the protective member is formed as a cylindrical body arranged along the rotation center axis, and the aperture is provided on a peripheral surface of the cylindrical body.

According to each of these inventions, it is possible to obtain the above-described effect with a simple configuration.

According to claim 9, there is provided a laser irradiation apparatus according to claim 1, wherein the emission optical system has a polygon mirror which rotates around a predetermined rotation center axis and has a plurality of mirrors arranged in a circumferential direction, and the protective member is rotated in connection with the polygon mirror and has a plurality of apertures through which the beams reflected by the plurality of mirrors pass.

According to this configuration, in the laser irradiation apparatus having the polygon mirror, it is possible to obtain the effect of suppressing the intrusion of foreign substances by allowing the aperture of the protective member to follow the beam with a simple configuration.

According to a 10th aspect of the present invention, there is provided a laser irradiation apparatus according to the 1st aspect, wherein the emission optical system includes a galvano scanner including a mirror oscillating around a predetermined rotation center axis, and the protection member is formed as a cylindrical body that rotates around a central axis in synchronization with the oscillation of the beam, and the aperture is formed on a peripheral surface of the cylindrical body.

According to a 11 aspect of the present invention, there is provided a laser irradiation apparatus according to the 10th aspect, wherein the aperture includes a 1st aperture through which a beam passes when the beam is oscillated in a 1st direction and a 2nd aperture through which the beam passes when the beam is oscillated in a 2nd direction opposite to the 1st direction, and wherein the 1st aperture is formed in a slit shape extending from one end of the cylindrical body in the axial direction of the cylinder, and the 2nd aperture is formed in a slit shape extending from the other end of the cylindrical body in the axial direction of the cylinder.

According to a 12 aspect of the present invention, there is provided a laser irradiation apparatus according to 1st aspect, wherein the emission optical system has a galvano scanner including a mirror oscillating around a predetermined rotation center axis, and wherein the protective member has a fixed portion having a 1st slit extending along a oscillating direction of the beam, and a rotating portion which rotates relative to the fixed portion synchronizing with the oscillation of the beam, and which has a 2nd slit extending in the direction which intersects the 1st slit when seen from the incident direction of a beam.

According to each of these inventions, in the laser irradiation apparatus having the galvano scanner, it is possible to obtain an effect of suppressing intrusion of foreign substances by causing the aperture of the protective member to follow the beam with a simple configuration.

According to a 13th aspect of the present invention, there is provided a laser irradiation apparatus according to any one of the 1st to 11th aspects, wherein the protective member includes an airflow generating unit that generates an airflow that discharges foreign substances during operation thereof.

According to this configuration, by generating an airflow in which the protective member itself discharges foreign substances by the operation of the protective member, it is possible to promote suppressing effect of the foreign substances intrusion without complicating the configuration of the device.

According to a 14th aspect of the present invention, there is provided a laser irradiation apparatus according to any one of the 1st to 12th aspects, wherein a plurality of the protective members are provided along an optical path of the beam.

According to this configuration, it is possible to further enhance suppressing effect of the foreign substances intrusion by the synergistic effect of the plurality of protective members.

According to a 15th aspect of the present invention, there is provided a laser irradiation apparatus according to any one of the 1st to 12th aspects, wherein 3 or more of the protective members are provided along an optical path of the beam, and a distance between the protective members along an optical path of the beam is sequentially changed.

According to this configuration, by appropriately setting the interval of the protective members according to the change in speed of the foreign substances when passing through the portion, it is possible to enhance the effect of capturing the foreign substances.

According to a 16th aspect of the present invention, there is provided a laser irradiation apparatus according to the 15th aspect, wherein a distance between the protective members is set so as to be gradually narrowed from the irradiation object side toward the emission optical system side.

According to this configuration, it is possible to further enhance the capturing effect in a case where the foreign substances scattered from the irradiation object side travel while being decelerated.

According to a 17th aspect of the present invention, there is provided a laser irradiation apparatus according to any one of the 1st to 16th aspects, further comprising a purge gas introduction section for introducing a purge gas into a region of the protective member opposite to the irradiation object side, and the purge gas is flowed out from the aperture of the protection member toward the irradiation object side.

According to a 18th aspect of the present invention, there is provided a laser irradiation apparatus according to any one of the 1st to 16th aspects, wherein a purge gas supply unit is provided adjacent to the nozzle unit from which the beam is emitted, for supplying a purge gas to the irradiation object side.

According to each of these inventions, by supplying a purge gas to an irradiation object, foreign substances scattered from the irradiated portion can be removed, and intrusion of foreign substances into the inside of the laser irradiation apparatus can be suppressed.

According to a 19 aspect of the present invention, there is provided a laser irradiation apparatus according to the 17th or 18th aspect, wherein a gas containing an inert gas as main component is used as the purge gas.

According to this, it is possible to prevent oxide from being generated on the surface of an irradiation object due to heat input at the time of beam irradiation.

[Effect of the Invention]

As described above, according to the present invention, it is possible to provide a laser irradiation apparatus which protects an optical element from foreign substances scattered from an irradiation object side.

[Brief Description of the Drawings]

FIG. 1 is a schematic cross-sectional view of an irradiation head according to a first embodiment of the present invention.

FIG. 2 is an enlarged perspective view around a protective member of the laser irradiation apparatus of FIG. 1.

FIG. 3 is a perspective view schematically showing a positional relationship of a protective member, an irradiation target, and a beam in the laser irradiation apparatus of FIG. 1.

FIG. 4 is an enlarged perspective view around a protective member in the second embodiment of a laser irradiation apparatus according to the present invention.

FIG. 5 is an enlarged perspective view around a protective member in the third embodiment of a laser irradiation apparatus according to the present invention.

FIG. 6 is an enlarged perspective view around a protective member in 4th embodiment of a laser irradiation apparatus according to the present invention.

FIG. 7 is a view showing a protective member in the 5th embodiment of a laser irradiation apparatus according to the present invention as viewed from a rotation center axis direction of a rotating plate.

FIG. 8 is a perspective view of a protective member according to 5th embodiment.

FIG. 9 is a perspective view of a protective member according to the 6th embodiment of the present invention.

FIG. 10 is a diagram showing an operation of the protective member of the 6th embodiment at the time of laser irradiation.

FIG.s 11 are 3 sides views of a protective member according to 7th embodiment of the present invention.

FIG. 12 is a perspective view of a protective member according to the 7th embodiment.

FIG. 13 is a diagram showing an operation of the protective member of the 7th embodiment at the time of laser irradiation.

FIG.s 14 are 3 sides views of a protective member according to the 8th embodiment of the present invention.

FIG. 15 is a perspective view of a protective member according to the 8th embodiment.

FIG.s 16 are 3 sides views of the polygon mirror and a protective member according to the 9th embodiment of the present invention.

FIG. 17 is a perspective view of a polygon mirror and a protective member according to the 9th embodiment.

FIG.s 18 are two sides views around a protective member in the 10th embodiment of the present invention.

FIG. 19 is a perspective view of a peripheral portion of a protective member according to a 10 embodiment.

FIG.s 20 are 3 sides views around of a protective member in the 11th embodiment of a laser irradiation apparatus according to the present invention.

FIG. 21 is a perspective view around a protective member according to a 11th embodiment.

FIG.s 22 are 3 sides views around a protective member in the 12th embodiment of a laser irradiation apparatus according to the present invention.

FIG. 23 is a perspective view around a protective member according to the 12th embodiment.

FIG.s 24 are 3 sides views around a protective member in the 13th embodiment of a laser irradiation apparatus according to the present invention.

FIG. 25 is a perspective view around a protective member according to the 13th embodiment.

FIG.s 26 are 4 sides views around a protective member in the 14th embodiment of a laser irradiation apparatus according to the present invention.

FIG. 27 is a perspective view around a protective member according to the 14th embodiment.

FIG.s 28 are 3 sides views around a protective member in the 15th embodiment of a laser irradiation apparatus according to the present invention.

FIG. 29 is a perspective view around a protective member according to the 15th embodiment.

FIG.s 30 are 3 sides views around a protective member in the 16th embodiment of a laser irradiation apparatus according to the present invention.

FIG. 31 is a perspective view around a protective member according to the 16th embodiment.

FIG.s 32 are 3 sides views around a protective member in the 17th embodiment of a laser irradiation apparatus according to the present invention.

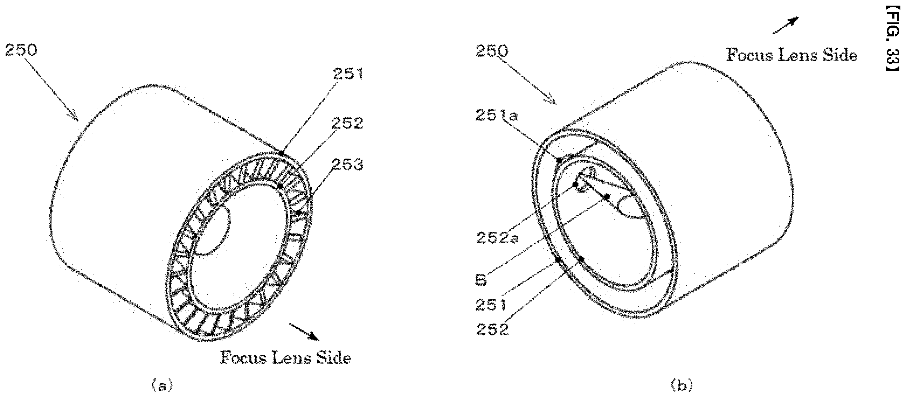

FIG. 33 is a perspective view around a protective member according to the 17th embodiment.

FIG.s 34 are 3 sides views around a protective member in the 18th embodiment of a laser irradiation apparatus according to the present invention.

FIG. 35 is a perspective view around a protective member according to the 18th embodiment.

[Mode for carrying out the invention]

<1st embodiment>

Hereinafter, the 1st embodiment of a laser irradiation apparatus to which the present invention is applied will be described.

The laser irradiation apparatus of the 1st embodiment is provided with an irradiation head 1 which irradiates a beam B of laser light supplied from a laser oscillator via a fiber F, for example, to an irradiation object, by scanning a surface of an irradiation object with a radiation spot (beam spot BS) along an arc scanning pattern, for performing various kinds of cleaning treatment such as peeling of an old paint coating and removal of foreign substances adhered thereto.

The irradiation object is made of, as an example, a metal such as plain steel, stainless steel, aluminum alloy, or the like, or concrete.

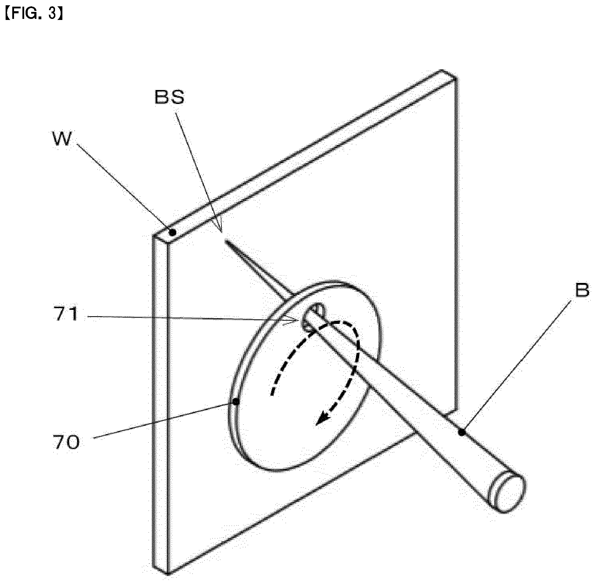

The cleaning process is a laser processing (surface treatment) in which an irradiation spot (beam spot BS) is scanned on a surface of an irradiation object W (see FIG. 3) by turning the spot along an arc having a relatively large diameter of about 10 mm or larger, for example, and removing various coatings such as an old paint coating (a paint coating to be peeled off), an oxide film, and dust, rust, and soot and the like adhered to the surface of an irradiation object W.

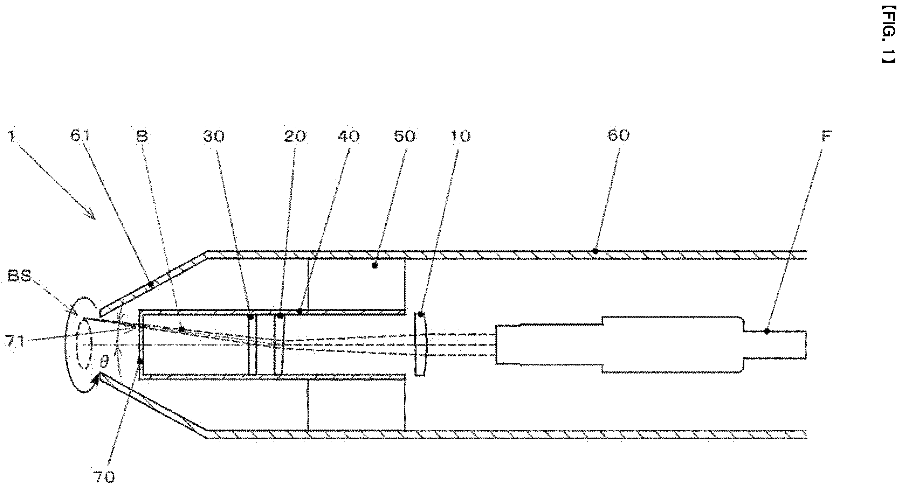

FIG. 1 is a schematic cross-sectional view of an irradiation head in the laser irradiation apparatus of the embodiment.

The irradiation head 1 irradiates a beam B of laser light transmitted from a laser oscillator (not shown) through a fiber F, for example, onto an irradiation object (not shown).

There is no particular limitation on the laser oscillator that can be used, and a YAG laser, a fiber laser, a $CO_2$ laser, a semiconductor laser, or the like can be used.

Further, there is no limitation on the output or oscillation method, and the oscillation method may be pulse oscillation or continuous oscillation (CW).

For example, in general cleaning applications, it is preferable to use a CW laser having an average power of about 0.1 to 100 kW, and more preferably, 1 to 30 kW, from the viewpoint of processing efficiency and handling efficiency.

While the irradiation head 1 is, for example, a hand-held type (portable type) which allows an operator to carry the head during a work, it is also possible to use it by attaching it to a robot capable of performing laser irradiation while moving the irradiation head 1 along a predetermined path taught in advance.

The irradiation head 1 is provided with a focus lens 10, a wedge prism 20, a protective glass 30, and a rotary cylinder 40, a motor 50, a housing 60, a protective member 70 etc..

FIG. 1 shows a cross section taken along a plane including an optical axis of the focus lens 10 and a rotation center axis of the rotary cylinder 40 etc..

The focus lens 10 is an optical element in which a laser beam transmitted from a laser oscillator to an irradiation head 1 via a fiber F enters after passing through a collimator lens (not shown).

A collimating lens is an optical element that parallels (collimates) a laser light emitted from an end of a fiber.

The focus lens 10 is an optical element that forms a laser light emitted from a collimating lens into a beam B that concentrates (focuses) at a predetermined focal position.

As the focus lens 10, for example, a convex lens having positive power can be used.

Note that the beam spot BS, which is an irradiation point on the surface of an irradiation object by the beam B, is arranged in the focus position (focus state) or in the vicinity of the focus position (defocus state).

At the beam spot BS, the beam B is converged or focused.

The focus lens 10 is fixed inside the housing 60.

The wedge prism 20 is an optical element that deflects a beam B of laser light emitted from the focus lens 10 by a predetermined deflection angle θ (see FIG. 1) and makes the optical axis angles of the incident side and the exit side different.

The wedge prism 20 is formed in a plate shape in which the thickness thereof is continuously changed so that one of the thicknesses becomes larger than the thickness of the other in the direction perpendicular to the optical axis direction of the incident side.

The wedge prism 20 is attached to the rotary cylinder 40.

The protective glass 30 is an optical element made of a flat glass or the like which is disposed adjacent to the wedge prism 20 along the optical axis direction toward the focus position side (the irradiation object side and the beam spot BS side).

The protective glass 30 is a member which prevents foreign substances such as spatters, dust, and the peeled paint coating scattered from the irradiation object side from adhering to other optical elements such as the wedge prism 20.

The protective glass 30 is an optical element which is disposed closest to the focal point position along the optical axis direction among the optical systems of the irradiation head 1, and is exposed to the object W side through the nozzle portion 61 and the aperture 71 of the protective member 70.

The protective glass 30 is detachably attached to the rotary cylinder 40.

Though, when the protective member 70, which will be described later, can obtain a shielding effect from dust or the like enough in practical use, the protective glass 30 can be omitted.

The rotary cylinder 40 is a cylindrical member that holds the wedge prism 20 and the protective glass 30 on the inner diameter side.

The rotary cylinder 40 is formed concentrically with an optical axis of the focus lens 10 and an optical axis of the laser beam entering to the focus lens 10 (an optical axis of the collimator lens).

The rotary cylinder 40 is supported on the housing 60 so as to be rotatable about a rotation center axis coinciding with an optical axis of the focus lens 10.

The rotary cylinder 40 functions as a holding member which holds a wedge prism 20 which is a rotary optical system.

The motor 50 is an electric actuator which rotationally drives the rotary cylinder 40 about a rotation center axis with respect to the housing 60.

For example, the motor 50 is configured as an annular motor (hollow motor) that is concentric with the rotary cylinder 40 and is provided on an outer diameter side of the rotary cylinder 40.

A stator of the motor 50 is fixed to the housing 60.

The rotor of the motor 50 is fixed to the rotary cylinder 40.

The motor 50 is controlled by a control device (not shown) so that the rotational speed of the rotary cylinder 40 substantially coincides with a desired target rotational speed.

The target rotational speed of the rotary cylinder 40 is, for example, about 2,000 to 200,000 rpm , preferably about 5,000 to 100,000 rpm .

Below the target rotational speed, damage to an irradiation object becomes large, and if it is higher than the target rotational speed, efficiency of the treatment decreases.

The posture of the irradiation head 1 is maintained so that the rotation center axis of the rotary cylinder 40 is orthogonal to the surface of the irradiation target W near the irradiation position, and the motor 50 rotates the wedge prism 20 together with the rotary cylinder 40, whereby the beam spot BS rotates in an arc shape around the rotation center axis of the rotary cylinder 40 along the surface of the irradiation target W.

In this state, when the irradiation head 1 is carried parallelly along the surface of the object W, the beam spot BS scans the surface of the object W while rotating in an arc shape.

Accordingly, when attention is paid to some point on the irradiation object W, a pulse of laser light is incident in a short time of several msec for example, and rapid heating and rapid cooling are sequentially performed in a short time.

At this time, cleaning objects such as an old paint coating, rusts, a film etc. formed on the surface of the object W to be irradiated and foreign substances adhered thereto are crushed and scattered.

The housing 60 is a cylindrical member constituting a casing of the main body of the irradiation head 1.

In the housing 60, in addition to the aforementioned focus lens 10, the wedge prism 20, the protective glass 30, the rotary cylinder 40, the motor 50 and the like, an end portion of the fiber F on the irradiation head 1 side, a collimator lens etc. are housed.

At an end of the housing 60 on the side of an irradiation object, a nozzle portion 61 whose diameter is reduced toward the tip end in a tapered shape is formed.

An aperture through which the beam B passes is provided at the tip end of the nozzle portion 61.

A purge gas is introduced from a gas supply unit (not shown) into the nozzle unit 61.

The purge gas is ejected from an opening of the nozzle portion 61 to prevent foreign substances scattered from the irradiation object W side from entering into the housing 60.

For example, air may be used as the purge gas.

Also, a gas containing an inert gas such as nitrogen or argon as a main component may be used as a purge gas. In this case, it is possible to obtain a function as a shield gas which prevents the irradiation target W from being oxidized by irradiation with laser light.

Further, the purge gas can also serve as a gas to assist treatment, and for example, an oxygen gas or a gas having an oxygen concentration higher than that of ordinary air can be used to form an oxide film at an irradiation site.

The protective member 70 is a member for protecting an optical system (optical elements) such as a protective glass 30 from foreign substances scattered from the object W side.

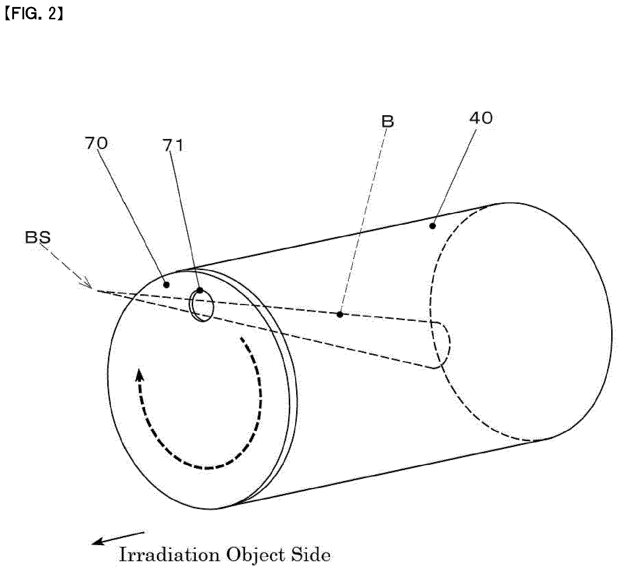

FIG. 2 is an enlarged perspective view around the protective member of the laser irradiation apparatus of FIG. 1.

FIG. 3 is a perspective view schematically showing a positional relationship of a protective member, an irradiation target, and a beam in the laser irradiation apparatus of FIG. 1.

The protective member 70 is formed in a disc shape along a plane orthogonal to the rotation center axis of the rotary cylinder 40, for example, and is provided to close the rotary cylinder 40 at an end portion of the rotary cylinder 40 on the irradiation target W side.

An aperture 71 through which the beam B passes is formed in the protective member 70.

The inner diameter of the aperture 71 is preferably as small as possible from the viewpoint of preventing intrusion of foreign substances, and is set to a size which is provided with a predetermined gap inevitably provided to the diameter of the beam B when passing through the protective member 70, for example.

The aperture 71 is arranged eccentrically from the center of the protective member 70 (rotation center axis of the rotary cylinder 40) according to the deflection angle $\theta$ of the beam B by the wedge prism 20.

In accordance with the rotation of the rotary barrel 40 and the protective member 70, the aperture 71 rotates in connection with the rotation of the beam B.

Note that, the purge gas may be introduced into the rotary cylinder 40 and may be ejected from the opening 71 through the inside of the nozzle 61 toward the irradiation object W.

According to the 1st embodiment described above, the following effects can be obtained.

(1) By providing the protection member 70 which is moving in connection with the rotation of the beam B so that the position of the aperture 71 is located on the path of the beam B, the size of the aperture through which the beam B is emitted can be reduced even in the case of the laser irradiation apparatus 1 which scans the irradiation object W while turning the beam B.

Further, since the position of the aperture sequentially moves in accordance with the change of the irradiation direction of the beam, the aperture has moved from the position at the time of the irradiation during the time when the foreign substances scatter at the irradiation position and the time when they return to the side of the laser irradiation device, so that the foreign substances scattered along the irradiation direction of the beam can be prevented from entering the aperture.

Thus, it is possible to prevent foreign substances scattered from the irradiation object W side from entering into an optical system such as the protective glass 30, and to prevent deterioration of the irradiation performance and burnout of the optical element caused by adhesion of foreign substances to the optical system.

(2) Since the protective member 70 is mounted on the rotary cylinder 40 which holds the wedge prism 20 which is a rotary optical system, the protective member can move in connection with the rotation of the beam without providing a particular power source or a drive mechanism for driving the protective member 70, and the configuration of the apparatus can be simplified.

(3) By adopting the wedge prism 20 which rotates together with the rotary barrel 40 as the rotary optical system, it is possible to form a beam B which rotates in a state of being deflected from the rotation center axis by a simple configuration.

(4) By introducing purge gas into the region of the opposite side of the irradiation target W side of the protective member 70 and allowing the purge gas to flow out from the aperture 71 of the protective member 70 toward the irradiation target side, foreign substances scattered from the irradiation portion is eliminated, and intrusion of foreign substances into the irradiation head 1 can be suppressed.

(5) By using a gas mainly containing an inert gas such as nitrogen gas as a purge gas, it is possible to suppress generation of an oxide on the surface of an irradiation object W due to heat input at the time of irradiation of the beam B.

<2nd embodiment>

Next, the 2nd embodiment of a laser irradiation apparatus to which the present invention is applied will be described.

In each of the embodiments described below, portions similar to those in the previous embodiment will be denoted by the same reference numerals, and description thereof will be omitted, and differences will mainly be described.

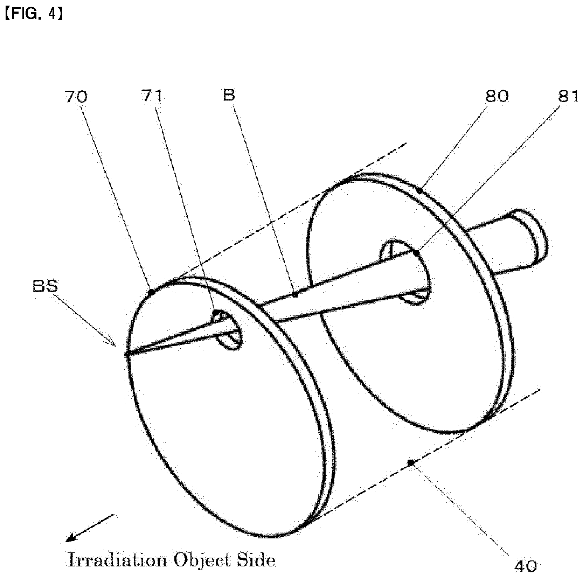

FIG. 4 is an enlarged perspective view around the protective member of the laser irradiation apparatus according to the 2nd embodiment.

The laser irradiation apparatus of the 2nd embodiment is characterized in that a protective member 80 to be described below is further provided between the protective member 70 and the protective glass 30 of the laser irradiation apparatus of the 1st embodiment.

The protective member 80 is formed in a disk shape along a plane orthogonal to the rotation center axis of the rotary cylinder 40, and is provided in the inner diameter side of the rotary cylinder 40 in such a way as to block the inside of the rotary cylinder 40.

An aperture 81 through which the beam B passes is formed in the protective member 80.

Although the inner diameter of the aperture 81 is preferably as small as possible like the inner diameter of the aperture 71, in the position of the protective member 80, since the beam B is not focused comparing to the position of the protective member 70, the inner diameter of the aperture 81 is larger than that of the aperture 71.

The aperture 81, like the aperture 71, corresponding to the deflection angle $\theta$ of beam B by the wedge prism 20, is arranged eccentrically with respect to the center of the protective member 80, but the eccentricity is smaller than the aperture 71.

According to the 2nd embodiment described above, in addition to the effects similar to those of the above-described 1st embodiment, by providing a plurality of protection members 70 and 80, the effect of preventing the intrusion of foreign substances can be promoted.

<3rd embodiment>

Next, the 3rd embodiment of a laser irradiation apparatus to which the present invention is applied will be described.

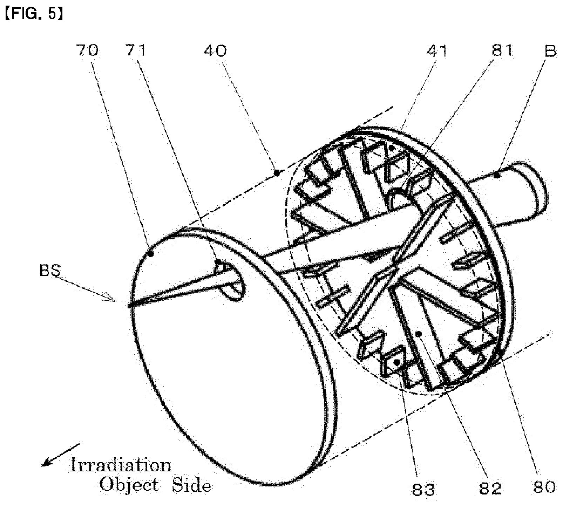

FIG. 5 is an enlarged perspective view around the protective member of the laser irradiation apparatus according to the 3rd embodiment.

The laser irradiation apparatus of the 3rd embodiment is characterized in that fins 82 and 83 which will be described below as an airflow generating portion are provided in the protective member 80 in the 2nd embodiment.

The fins 82 are tab-like portions which is provided so as to protrude from a surface portion of the protective member 80 on the irradiation object W side.

A plurality of fins 82 extend in the radial direction from the vicinity of the central portion of the protective member 80 to the vicinity of the outer peripheral edge portion, and are distributed in the circumferential direction of the protective member 80.

For example, the fins 82 are arranged at equal intervals so that an angular position around the rotation center axis of the rotary cylinder 40 is located at an interval of 60 °.

The fins 82 have an effect of hitting down and preventing foreign substances, such as dust, which enter and stay inside of the rotary cylinder 40, from passing through the aperture 81. In order to enhance such an effect, it is preferable that a pair of fins 82 are arranged adjacent to each other on both sides of the aperture 81.

The fins 83 are tab-like portion which is provided so as to protrude from a surface portion of the protection member 80 on the irradiation object W side.

The fins 83 are provided near the outer peripheral edge of the protective member and extends along the radial direction.

A plurality of fins 83 are distributed in the circumferential direction of the protective member 80.

The number of the fins 83 is set to increase in accordance with an increase in the amount of air required at the target rotation speed, and in this embodiment, the fins 83 position around the rotation center axis of the rotary cylinder 40 is arranged, for example, at 3 positions between a pair of adjacent fins 82.

The aperture 81 is arranged on the inner diameter side of the protective member 80 with respect to the fin 83.

In the above-described configuration, when the rotating cylinder 40 is rotated, an air flow is generated in which the fins 82 and 83 convey air around the protective member 80 to the outer diameter side.

A slit 41 is formed on the rotating cylinder 40 for discharging the air flow to the outside of the rotating cylinder 40.

The slit 41 is formed as an opening passing through the peripheral surface of the rotating cylinder 40 around the fins 82 and 83 formed, and may be configured in an arrangement so as to extend in the circumferential direction of the rotating cylinder 40 or to be discretely distributed.

According to the 3rd embodiment described above, in addition to effects similar to those of the 1st and 2nd embodiments described above, when the protective member 80 is rotated, fins 82 and 83 generate an air flow flowing from an inner diameter side to an outer diameter side in a space portion between the protective members 70 and 80, and even when foreign substances enter into the space portion, foreign substances can be discharged from the slit 41 to the outside of the rotary cylinder 40.

<4th embodiment>

Next, the 4th embodiment of a laser irradiation apparatus to which the present invention is applied will be described.

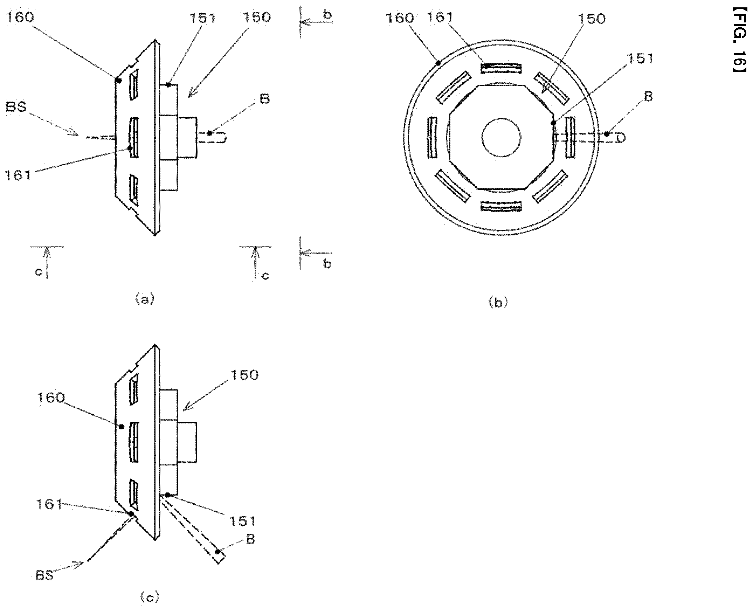

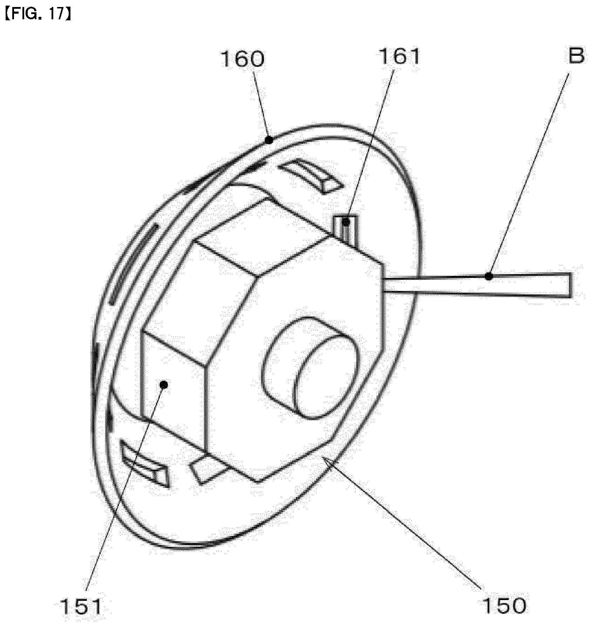

The laser irradiation apparatus of the 4th embodiment includes a polygon mirror in place of a wedge prism 20, a rotating cylinder 40, a motor 50, and etc. of the 1st embodiment. The polygon mirror (not shown, see FIG. 16 and FIG. 17, which will be described later) has an arrangement of a plurality of mirrors in the circumferential direction of a rotating body and continuously deflects the beam B.

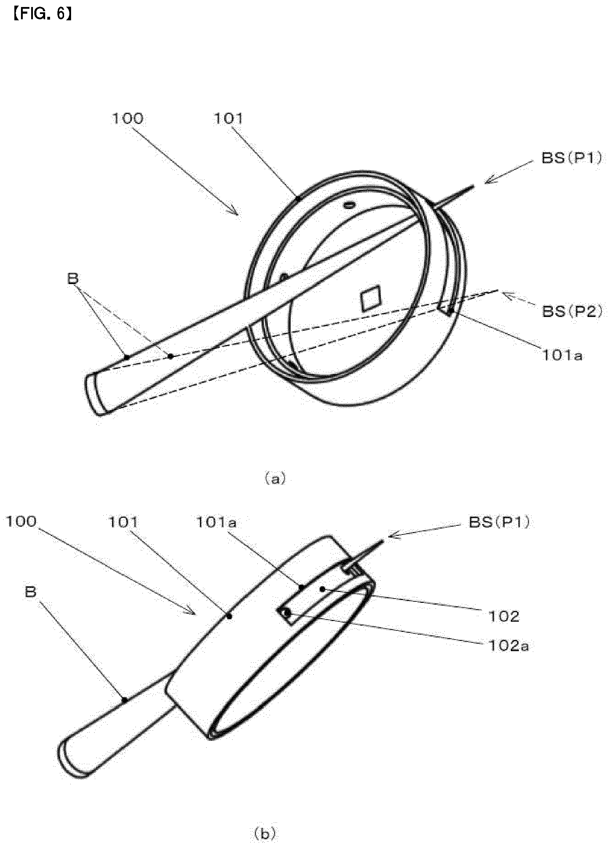

FIG. 6 is an enlarged perspective view around the protective member of the laser irradiation apparatus according to the 4th embodiment.

In the 4th embodiment, in accordance with the rotation of the polygon mirror (not shown), the beam spot BS swings from the position P1 to the position P2.

When the beam spot BS reaches the position P2, the mirror which reflects the beam B switches to another mirror which is adjacent, and the beam spot BS returns to the position P1 again and starts to swing to the position P2.

The protection member 100 of the 4th embodiment has a double cylinder structure including a fixed cylinder 101 and a rotary cylinder 102.

The fixed cylinder 101 is formed in a cylindrical shape (annular shape) having a small axial dimension with respect to the diameter.

In some of the circumferential surface of the fixed cylinder 101, a slit 101 through which the beam B passes is formed.

The slit 101 a is formed in an elongated hole shape extending along the circumferential direction of the fixed cylinder 101.

Similar to the fixed cylinder 101, the rotating cylinder 102 is formed into a cylindrical shape (annular shape) having a small axial dimension with respect to the diameter.

The rotary cylinder 102 is inserted into the fixed cylinder 101 so as to be concentric with the fixed cylinder 101.

The rotary cylinder 102 is supported so as to be rotatable around a central axis with respect to the fixed cylinder 101, and is rotary driven by an actuator such as a motor or the like (not shown) in connection with (synchronously with) the polygon mirror.

On the circumferential surface of the rotary cylinder 102, apertures 102a through which the beam B passes are formed.

The apertures 102a are distributed discretely at equal intervals in the circumferential direction of the rotary cylinder 102.

The beam B enters from the direction inclined with respect to both the axial direction and the radial direction of the fixed cylinder 101 and the rotating cylinder 102, so as the beam B not to interfere with the circumferential portions of the fixed cylinder 101 and the rotating cylinder 102.

In the 4th embodiment, at the time of irradiation in which the beam B is oscillated by the polygon mirror, the beam spot BS moves from the position P1 to the position P2, and returns to the position P1 after reaching the position P2, and repeats the movement to the position P2.

At this time, the rotary cylinder 102 rotates relative to the fixed cylinder 101, and the aperture 102 moves in accordance with the oscillation of the beam B, thereby allowing passage of the beam B.

Further, when the beam spot BS returns to the position P1 after reaching the position P2, it is configured that the beam B passes through the other adjacent aperture 102a (the aperture 102a through which the beam B passes successively switches).

According to the 4th embodiment described above, when irradiating an irradiation object with the beam B while swinging the beam B by the polygon mirror, it is possible to prevent foreign substances scattered from the irradiation object side from entering into the protective member 100 without obstructing the optical path of the beam B.

<5th embodiment>

Next, the 5th embodiment of a laser irradiation apparatus to which the present invention is applied will be described.

As in the 4th embodiment, the laser irradiation apparatus of the 5th embodiment has a polygon mirror as a means for deflecting and oscillating the beam B.

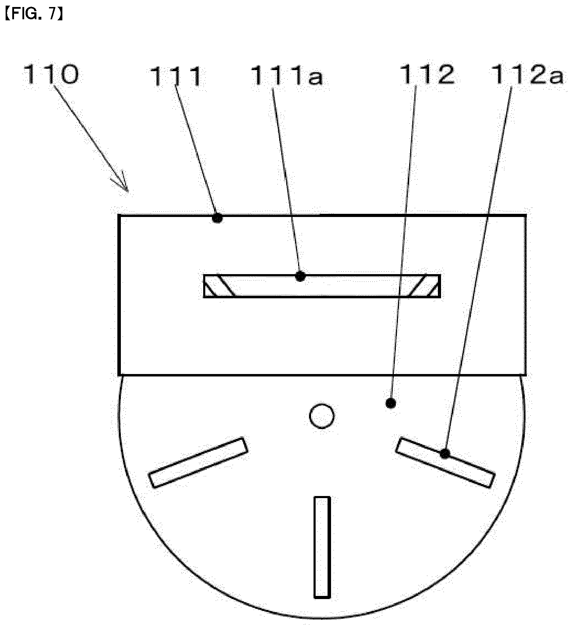

FIG. 7 is a view of the protective member in the laser irradiation apparatus according to the 5th embodiment as viewed from the direction of the rotation center axis of the rotating plate.

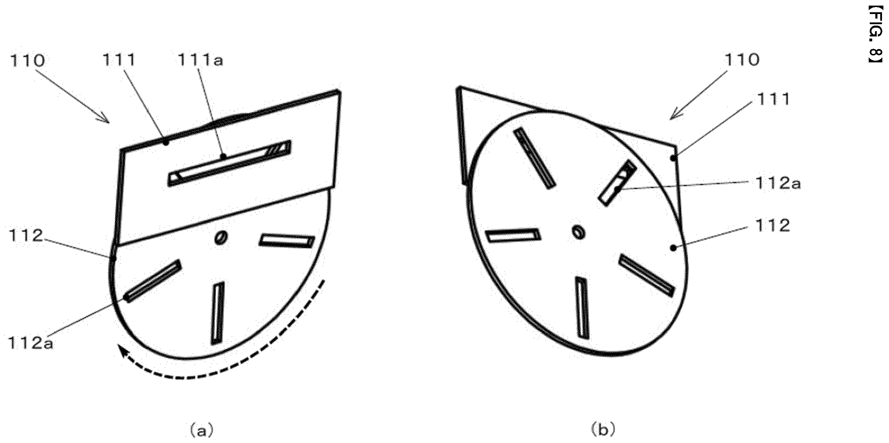

FIG. 8 is a perspective view of a protective member according to the 5th embodiment.

FIG. 8(a) is a view seen from the fixed plate side, and FIG. 8(b) is a view seen from the rotating plate side.

The protective member 110 of the 5th embodiment has a fixed plate 111 and a rotating plate 112.

The fixed plate 111 and the rotating plate 112 are respectively formed in a flat plate shape and are faced to each other interposing a predetermined space in the thickness direction.

The rotating plate 112 is disposed on an irradiation object side or a side opposite to an irradiation object side with respect to the fixed plate 111.

The fixed plate 111 has, for example, a rectangular plane shape as viewed from a normal direction.

A slit 11 1a is formed in a central portion of the fixed plate 111.

The slit 111a is formed as a rectangular long hole having a long side direction along a predetermined direction.

The slit 111a is disposed at a center portion in the longitudinal direction thereof so as to be orthogonal to the radial direction of the rotary plate 112.

The rotating plate 112 is formed in a disk shape, for example, in a circular plane shape as viewed from a normal direction.

The rotating plate 112 is supported rotatably around a central axis of rotation provided at a central portion thereof, and is rotationally driven by an actuator such as an electric motor (not shown).

Slits 112a are formed in the rotating plate 112.

The slits 112a are formed as an elongated hole extending along the radial direction of the rotating plate 112 from the vicinity of the center to the vicinity of the outer peripheral edge of the rotating plate 112.

A plurality of slits 112a (e.g., 5 slits) are distributed in the circumferential direction of the rotating plate 112 and are arranged at a same distance.

In the 5th embodiment, a beam reflected by a polygon mirror (not shown) passes through a portion where the slit 111a of the fixed plate 111 and the slit 112a of the rotating plate 112 overlap each other, and is emitted to the irradiation object side.

At this time, in response to the beam oscillation due to the rotation of the polygon mirror, the slit 112a of the rotating plate 112 rotates and follows the oscillation of the beam.

According to the 5th embodiment described above, even in a case where the beam B is periodically oscillated by the polygon mirror, it is possible to appropriately prevent the foreign substances scattered from the irradiation object side from entering the optical system side by a combination of the fixed plate 111 and the rotating plate 112.

<6th embodiment>

Next, the 6th embodiment of a laser irradiation apparatus to which the present invention is applied will be described.

The laser irradiation apparatus according to the 6th embodiment of the present invention includes a galvano scanner (galvanometer scanner) in place of the wedge prism 20, the rotating tube 40, and the motor 50 etc. of the 1st embodiment, the galvano scanner having, for example, a pair of mirrors which reflect the beam B and which can be oscillated so as to change the reflection direction of the beam B.

The laser irradiation apparatus of the 6th embodiment has a function of oscillating the beam B so that the beam spot BS reciprocates along a predetermined straight line by swinging one of the mirrors constituting the galvano scanner within a predetermined angle range.

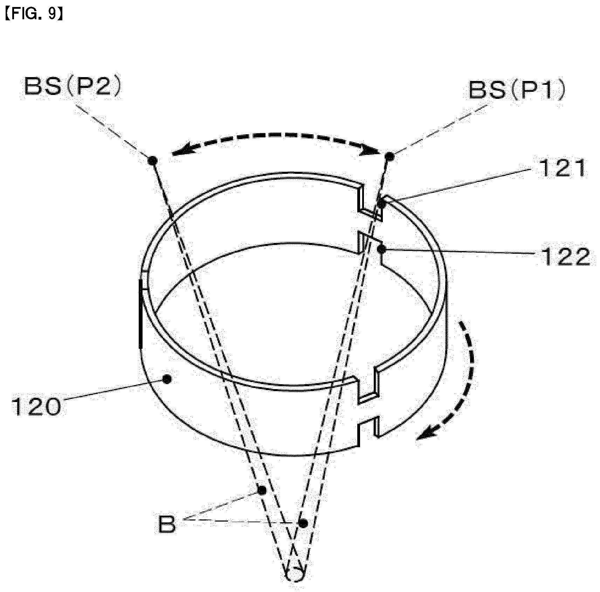

FIG. 9 is a perspective view of a protective member according to the 6th embodiment.

As shown in FIG. 9, in the 6th embodiment, the beam B oscillates such that the beam spot BS reciprocates between the position P1 and the position P2.

The protective member 120 of the 6th embodiment is formed into a short cylindrical shape having a short axial length with respect to a radius.

In the protective member 120, slits 121 and 122 are formed as the 1st slit and the 2nd slit for allowing passage of the beam B.

The slit 121 is formed by recessing a part of one edge of the protective member 120 toward the central axis direction thereof.

The slit 122 is formed by recessing a part of the other end edge of the protective member 120 toward the central axis direction thereof.

Three sets, for example, of slits 121 and 122 are distributed in the circumferential direction of the protective member 120 at a regular spacing.

The slits 121,122 are arranged so that the circumferential positions on the protective member 120 coincide with each other.

The beam B enters into the protective member 120 from a direction inclined with respect to the central axis direction and the radial direction of the protective member 120, passes through either the slit 121 or the slit 122, and reaches an irradiation object.

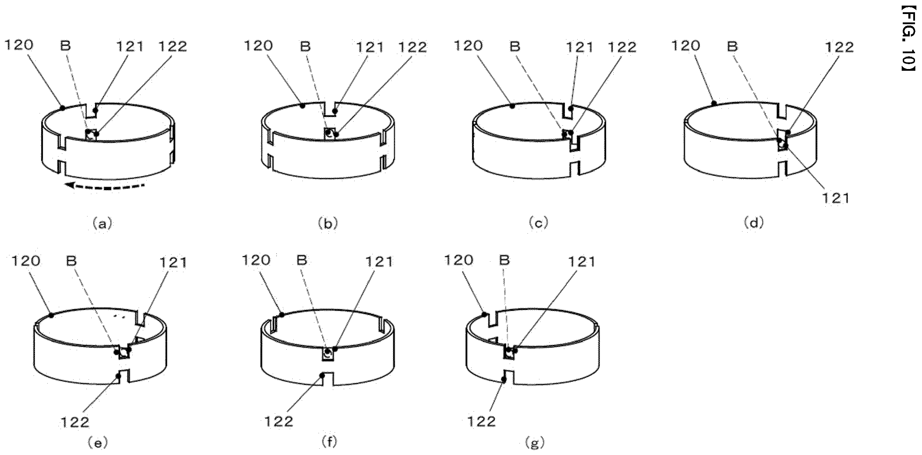

FIG. 10 is a diagram showing an operation of the protective member of the 6th embodiment at the time of laser irradiation.

FIG. S. 10 (a) to 10 (g) show the state of the protection member 120 and the passing point of the beam B in time series.

As shown in FIG. 10 (a) to FIG. 10 (c), when viewed from the incident side of the beam B (the side opposite to the side of the irradiation object), when the beam B swings in the 1st direction (e.g., from left to right in FIG. 10), the beam B passes through a slit 122 provided at a half portion of the protection member 120 on the irradiation object side (the back side in FIG. 10).

At this time, the protective member 120 rotates around the central axis in synchronization with the oscillation of the mirror constituting the galvano scanner.

Thus, the slit 122 moves following the oscillation of the beam B.

As shown in FIG. 10 (d), when the beam B has reached the end of the 1st direction, the beam B moves into the slit 121 provided in the half of the protective member 120 on the side opposite to the irradiation object side (the front side in FIG. 10).

Thereafter, as shown in FIG.s 10 (e) to 10 (g), when the beam B swings to the 2nd direction (from right to left in FIG. 10), the slit 121 moves following the oscillation of the beam B.

When the beam B reaches the end of the 2nd direction, the process returns to the state of FIG. 10(a), and the subsequent operation is repeated.

According to the 6th embodiment described above, by the cylindrical protective member 120 rotating in a single direction, it is possible to suppress intrusion of foreign substances from an irradiation object during the beam B oscillates reciprocally with a simple configuration.

<7th embodiment>

Next, the 7th embodiment of a laser irradiation apparatus to which the present invention is applied will be described.

As in the 6th embodiment, the laser irradiation apparatus of the 7th embodiment has a galvano scanner which oscillates the beam B so as to reciprocate.

FIG.s 11 are 3 sides views of the protective member in the 7th embodiment.

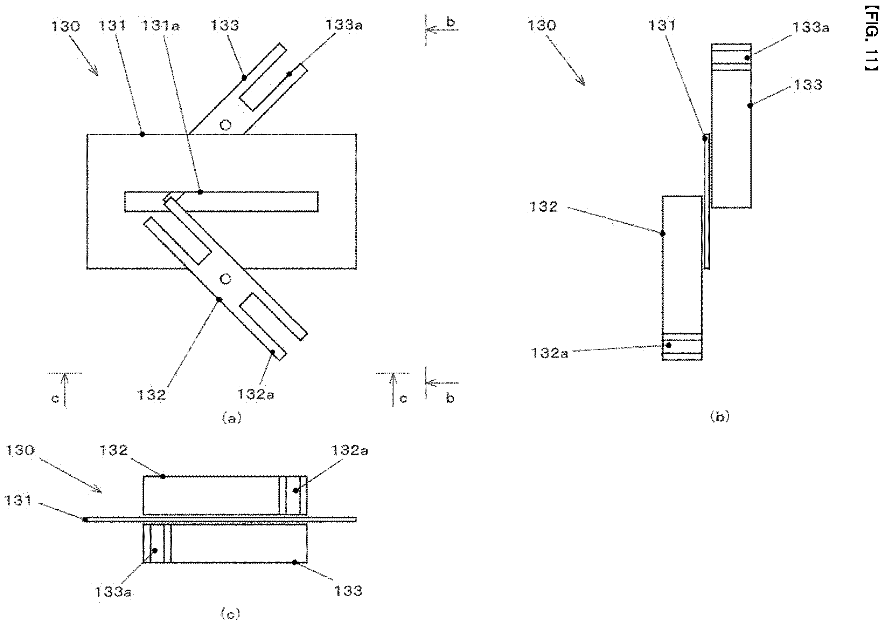

FIG. 11 (a) is a view of the protective member 130 seen from the direction of the rotation center axis of the rotating plate 132 and 133.

FIG. 11 (b) is a view taken along an arrow b-b of FIG. 11(a).

FIG. 11 (c) is a view taken along the line c-c of FIG. 11 (a).

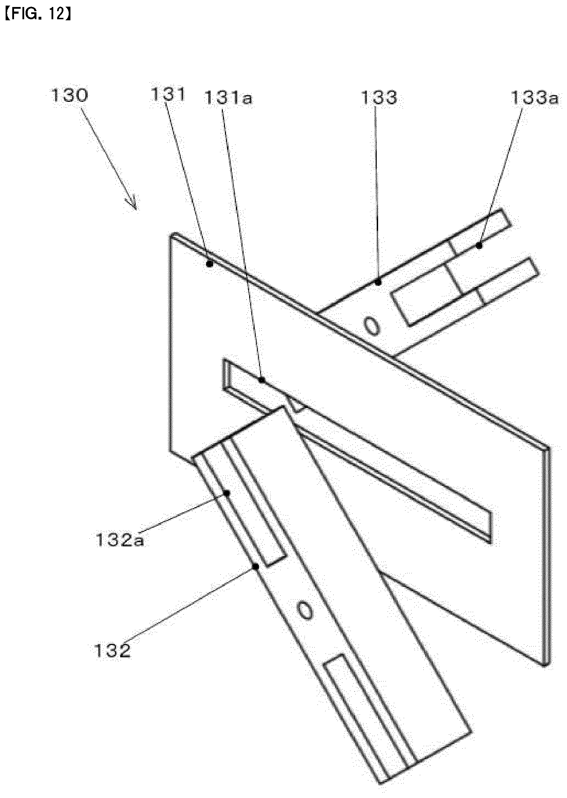

FIG. 12 is a perspective view of a protective member according to the 7th embodiment.

The protective member 130 of the 7th embodiment is configured to include a fixed plate 131 and rotating plates 132 and 133.

The fixed plate 131 and the rotating plate 132,133 are formed in a flat plate shape, and are arranged to face to each other at a predetermined spacing in the thickness direction.

The rotating plate 132,133 has a larger thickness than the fixed plate 131 .

As shown in FIG. 11(a), the fixed plate 131 has a planar shape, for example, rectangular as viewed from a normal direction.

A slit 131a is formed in a central portion of the fixed plate 131.

The slit 131a is formed as a rectangular long hole having a long side direction parallel to the long side direction of the fixed plate 131.

The rotating plate 132,133 is disposed on one side and the other side in the normal direction of the fixed plate 131.

The rotary plate 132,133 is a plate-like member arranged in parallel with the fixed plate 131, and has a rectangular shape when viewed from the thickness direction.

The rotating plate 132,133 is supported so as to be rotatable around a rotation center axis perpendicular to the thickness direction and disposed at a central portion thereof, and is rotationally driven by an actuator such as an electric motor (not shown).

The rotating plate 132 is disposed so as to face the surface of one side of the fixed plate 131 with a small gap therebetween.

The rotating plate 133 is disposed so as to face to the other side of the fixed plate 132 with a small gap.

As shown in FIG. 11(a), when viewed from the thickness direction of the fixed plate 131 etc., the rotation center axis of the rotating plate 132 and the rotation center axis of the rotating plate 133 are arranged in the vicinity of the central portion of the long side of the outer peripheral edge portion of the fixed plate 131, and in parallel with each other with the fixed plate 131 interposed therebetween.

Slits 132a,133a are formed on both sides of in the longitudinal direction of the rotary plate 132,133.

The slits 132a and 133a are formed in a groove shape in which both end surfaces of the rotating plate 132,133 are recessed toward the center (rotation center axis) side.

The slits 132a and 133a are formed so as to cross the slit 131a of the fixed plate 131 when the rotating plates 132,133 are rotated.

Hereinafter, an operation of the protective member 130 at the time of laser irradiation in the 7th embodiment will be described.

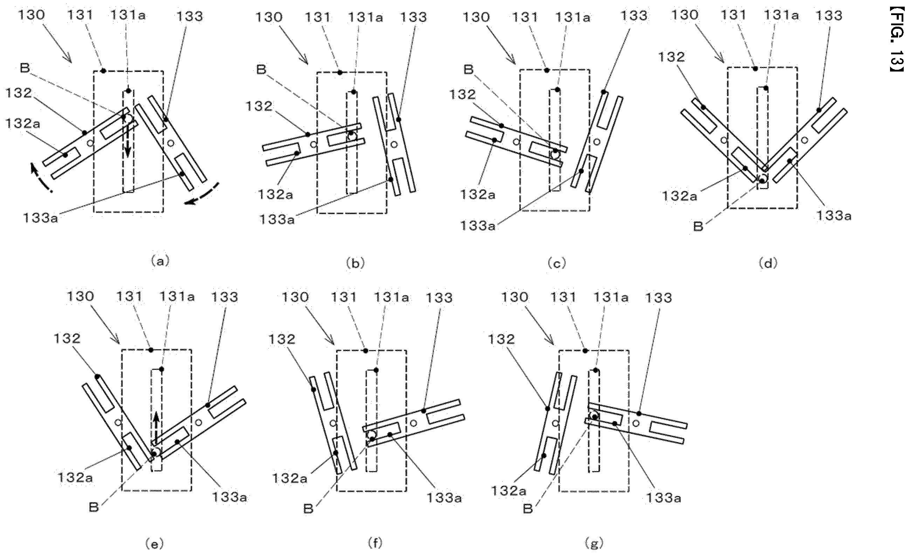

FIG. 13 is a diagram showing an operation of the protective member of the 7th embodiment at the time of laser irradiation.

FIG. S. 13 (a) to 13 (g) show the state of the protection member 130 and the passing point of the beam B in time series.

As shown by a broken line arrow in FIG. 13(a), the rotating plates 132 and 133 synchronously rotate in the same direction (clockwise in FIG. 13) around the respective rotation center axes.

As shown in FIG. 13 (a) to FIG. 13 (d), when the beam B moves in the 1st direction (in the case of FIG. 13, the direction from the upper side to the lower side), the beam B moves along the longitudinal direction of the slit 131a of the fixed plate 131 in a state of being sandwiched by the slit 132a of the rotating plate 132.

At this time, the rotating plate 132 rotates with the movement of the beam B, and the slit 132a follows the beam B.

As shown in FIG. 13(e) to FIG. 13 (g), when the beam B moves in the 2nd direction (in the case of FIG. 13, from the lower side to the upper side), the beam B moves along the longitudinal direction of the slit 131a of the fixed plate 131 in a state of being sandwiched between the slits 133a of the rotating plate 133.

At this time, the rotating plate 133 rotates with the movement of the beam B, and the slit 133a follows the beam B.

According to the 7th embodiment described above, by a collaboration of the fixed plate 131 and the rotating plates 132, 133, it is possible to prevent foreign substances scattered from the irradiation object side from entering the optical system side.

In addition, by rotating the slits 133a and 132a of the rotary plates 132 and 133 so as to follow the beam B, foreign substances entering along the optical path of the beam B are knocked off by the inner surface of the slits, and the effect of suppressing the intrusion of foreign substances can be promoted.

<8th embodiment>

Next, the 8th embodiment of a laser irradiation apparatus to which the present invention is applied will be described.

As in the 7th embodiment, the laser irradiation apparatus of the 8th embodiment includes a galvano scanner which oscillates the beam B so that the beam spot BS reciprocates.

FIG.s 14 are 3 side views of the protective member in the 8th embodiment.

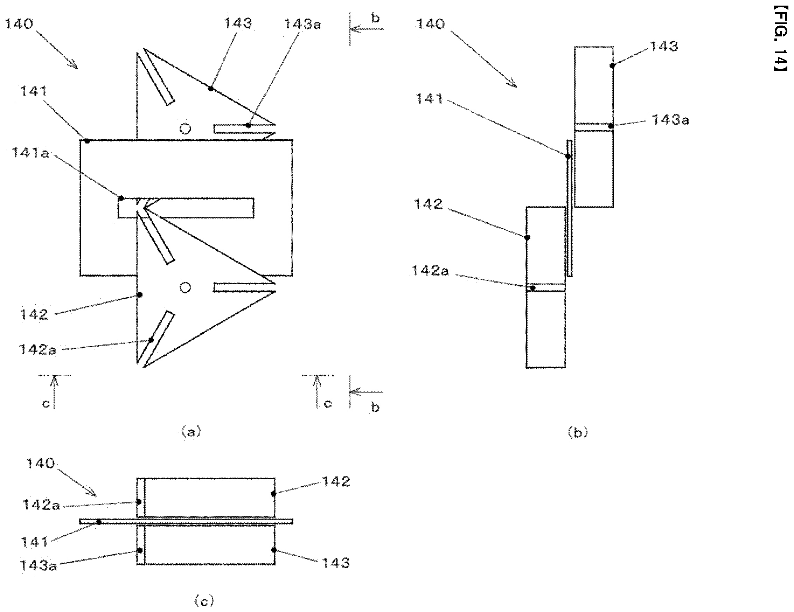

FIG. 14(a) is a view of the protective member 140 seen from the direction of the rotation center axis of the rotating plate 142,143.

FIG. S. 14 (b) and 14 (c) are views seen from the arrow b-b and the arrow c-c of FIG. 14 (a), respectively.

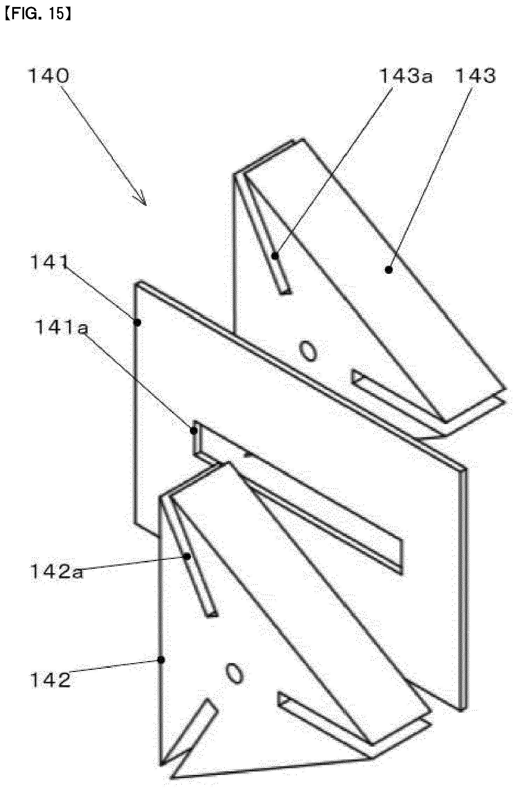

FIG. 15 is a perspective view of a protective member according to the 8th embodiment.

As shown in FIG. 14(a), a planar shape of the fixed plate 141 as viewed from the normal direction is, for example, a rectangular shape.

A slit 141a is formed in a central portion of the fixed plate 141.

The slit 141a is formed as a rectangular long hole having a long side direction parallel to the long side direction of the fixed plate 141.

The rotating plate 142,143 is disposed on one side and the other side of the fixed plate 141 in the normal direction.

The rotating plate 142,143 is a plate-like member arranged in parallel with the fixed plate 141, and has a substantially equilateral triangle shape when viewed from the thickness direction.

The rotating plate 142,143 is supported so as to be rotatable around a rotation center axis perpendicular to the thickness direction and disposed at a central portion thereof, and is rotationally driven by an actuator such as an electric motor (not shown).

The rotating plate 142 is disposed so as to face the surface of one side of the fixed plate 141 with a small gap therebetween.

The rotating plate 143 is disposed so as to face the other side of the fixed plate 141 with a small gap therebetween.

As shown in FIG. 14(a), when viewed from the thickness direction of the fixed plate 141 etc., the rotation center axis of the rotating plate 142 and the rotation center axis of the rotating plate 143 are arranged in the vicinity of the central portion of the long side of the outer peripheral edge portion of the fixed plate 141, in parallel with each other with the fixed plate 141 interposed therebetween.

Slits 142a and 143a are formed in each of the triangular apexes of the rotating plates 142 and143.

The slits 142a and 143a are formed in a groove shape in which the top portions of the rotating plates 142, 143 are recessed toward the center portion side.

The slits 142a and 143a are formed so as to cross the slits 141a of the fixed plate 141 when the rotating plates 142, 143 are rotated.

According to the 8th embodiment described above, in addition to the effects similar to those of the above-described 7th embodiment, by increasing the number of slits 142a and 143a provided in the rotary plate 142, 143, the scanning speed by the Galvano scanner can be improved without excessively increasing the rotational speed of the rotary plates 142, 143.

<9th embodiment>

Next, the 9th embodiment of a laser irradiation apparatus to which the present invention is applied will be described.

The laser irradiation apparatus according to the 9th embodiment has a polygon mirror as a means for deflecting and oscillating the beam B like the 4th embodiment.

FIG.s 16 are 3 sides views of the polygon mirror and the protective member according to the 9th embodiment.

FIG. 16(a) is a view seen from one direction orthogonal to the rotation center axis of the polygon mirror.

FIG. 16(b) is a view seen from an arrow b-b of FIG. 16(a).

FIG. 16(c) is a view seen from an arrow c-c of FIG. 16(c).

FIG.s 17 are 3 sides views of the polygon mirror and the protective member according to the 9th embodiment.

In the 9th embodiment, a protective member 160 is provided on the polygon mirror 150.

The polygon mirror 150 is supported so as to be rotatable around a predetermined rotation center axis and is rotationally driven by an actuator such as an electric motor (not shown).

The polygon mirror 150 has a plurality of mirrors 151 arranged along a circumferential direction with respect to a rotation center axis.

In the 9th embodiment, 8 mirrors 151, for example, are provided and, as shown in FIG. 16(b), a shape of the polygon mirror 150 viewed from the rotation center axis direction is a regular octahedron.

As shown in FIG. 16(b), the incident beam B on the mirror 151 is in a state in which the optical axis is along a plane including the central axis of rotation of the polygon mirror 150 and inclined with respect to the rotation center axis, and is reflected on the surface of the mirror 151 and is emitted toward the irradiation object side.

The protective member 160 is provided so as to cover an outer diameter side of a half of the polygon mirror 150 of the emitting side (the irradiation object side) in the direction of the rotation center axis of the mirror 151 of the polygon mirror 1.

The protective member 160 is formed in a cylindrical shape concentric with a rotation center axis of the polygon mirror 150.

In the protective member 160, in the direction of the rotation center of the polygon mirror 150, the emission side (the irradiation target side) is formed into a tapered shape whose diameter is reduced with respect to the incident side (the light source side).

The protective member 160 is fixed to the polygon mirror 150 and rotates therewith.

Slits 161 are formed on the protective member 160.

The slits 161 are formed into an elongated hole shape extending along the circumferential direction of the protective member 160.

As shown in FIG. 16(b), a plurality of slits 161 are distributed in the circumferential direction of the protective member 160.

The slits 161 are arranged such that an angular position of a central portion of the slits around a rotation center axis of the polygon mirror 150 coincides with an angular position of a central portion of the plurality of mirrors 151.

In the case of the 9th embodiment, the slits 161 are arranged at equal intervals in 8 places, for example, along the circumferential direction of the protective member 160.

In the laser irradiation apparatus of the 9th embodiment, at the time of irradiation of the beam B, the beam B is oscillated by rotating the polygon mirror 150 and the protective member 160 around the rotation center axis.

At this time, the beam B passes through the slit 161 of the protective member 160 and is emitted.

According to the angular position of the polygon mirror 150, the passing position of the beam B moves along the longitudinal direction of the slit 161.

In addition, when the beam B is switched from the mirror 151 to another adjacent mirror on which the beam B enters, the slit 161 through which the beam B passes is also switched to the one corresponding to the mirror 151.

According to the 9th embodiment described above, by fixing the protection member 160 to the polygon mirror 150, it is possible to suppress intrusion of foreign substances scattered from the irradiation object side, and it is not necessary to provide an actuator, a mechanism, or the like for driving the protection member 160, and thus it is possible to simplify the configuration.

<10th embodiment>

Next, the 10th embodiment of a laser irradiation apparatus to which the present invention is applied will be described.

In the laser irradiation apparatus of the 10th embodiment, instead of the wedge prism 20 of the 2nd embodiment, the optical axis of the beam B is bent in a Z shape by a pair of mirrors M1 and M2 which rotate together with the rotary cylinder 40, and a protective member 170 to be described below is provided.

FIG.s 18 are double sides views around the protective member in the laser irradiation apparatus according to the 10th embodiment.

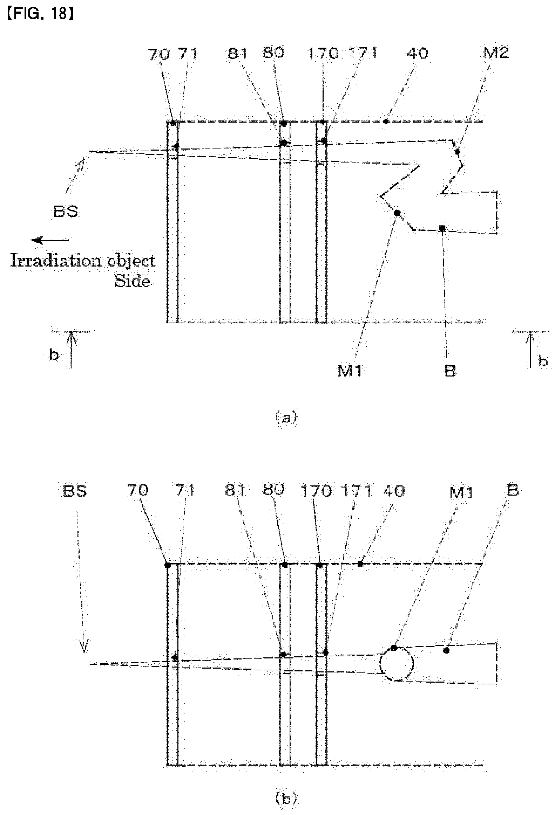

FIG. 18(a) is a view seen from a normal direction of a plane including an optical axis of a beam B traveling while being bent.

FIG. 18(b) is a view seen from an arrow b-b of FIG. 18(a).

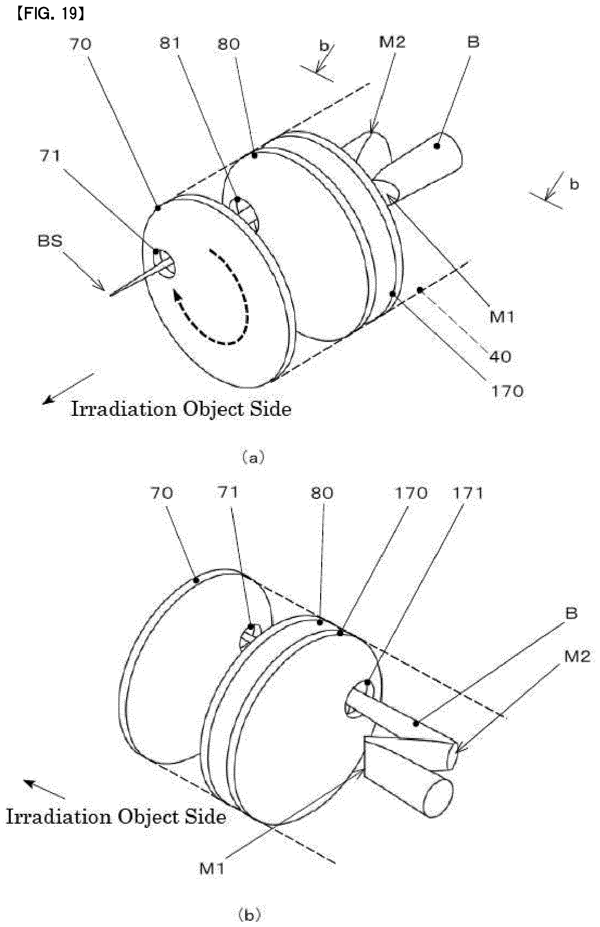

FIG. 19 is a perspective view around the protective member.

The laser irradiation member of the 10th embodiment, in addition to the protective members 70 and 80 of the 2nd embodiment, further includes a protective member 170.

The protective member 170 is disposed inside the rotary cylinder 40, and on the optical system side of the protective member 80 (the side opposite to the irradiation object side), and on the irradiation object side of the mirrors M1 and M2.

The protective member 170 is formed in a disk shape along a plane orthogonal to the rotation center axis of the rotary cylinder 40, and is provided on the inner diameter side of the rotary cylinder 40 so as to close the inside of the rotary cylinder 40.

An aperture 171 through which the beam B passes is formed in the protective member 170.

Although it is preferable that the inside diameter of the aperture 171 is as small as possible like the inside diameter of the aperture 71, 81, since the beam B in the position of the protection member 170 is not converged relative to the position of the protection member 70, 80, the inside diameter of the aperture 171 is larger than that of the aperture 71, 81.

The size of eccentricity of the aperture 71, 81, 171 with respect to the rotation center axis of the rotary cylinder 40 is set so that the beam B passes through the center of each aperture according to a size of eccentricity of the beam B emitted from the mirror M2.

A distance between the protective member 170 and the protective member 80 in the rotation center axis direction of the rotary cylinder 40 is made smaller than a distance between the protective member 70 and the protective member 80.

According to the 10th embodiment described above, since 3 protective members are arranged along the passing direction of the beam B, it is possible to further promote the effect of suppressing the foreign substances entering from the irradiated object side.

Further, by decreasing the distances between the protective members 70, 80, and 170 according to the order from the irradiation object side, it is possible to appropriately capture the foreign substances which slow down while scattering.

Further, by bending the beam B in a Z shape by the pair of mirrors M1 and M2, the length of the light path can be increased without increasing the length of the irradiation head, and by narrowing down the beam B incident into the apertures of the protective member, the diameter of each aperture can be reduced to further enhance the effect of suppressing the intrusion of the foreign substances.

<11th embodiment>

Next, the 11th embodiment of a laser irradiation apparatus to which the present invention is applied will be described.

FIG.s 20 are 3 sides views around the protective member in the 11th embodiment.

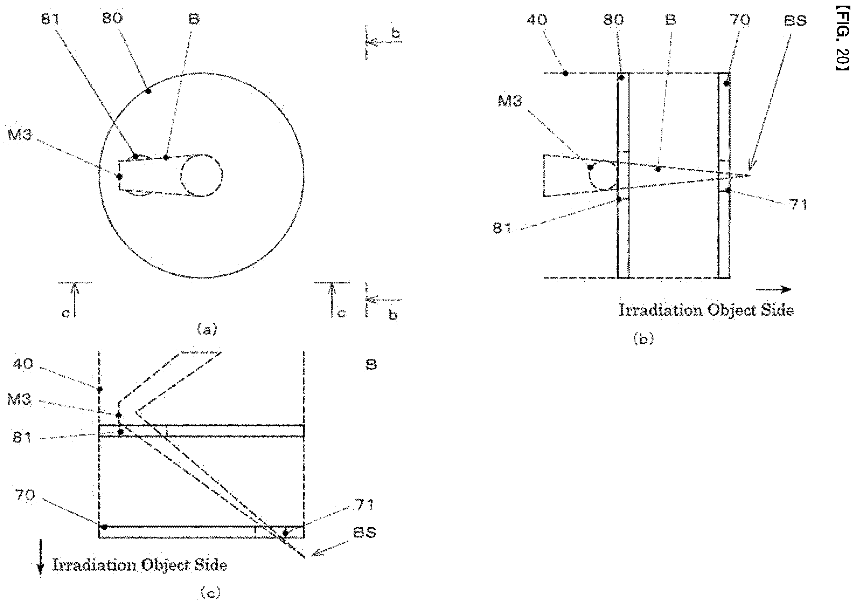

FIG. 20(a) is a view seen from the optical system side in the rotation center axis direction of the rotary cylinder.

FIG. S. 20(b) and 20(c) are views seen from an arrow b-b of FIG. 20 (a) and the arrow c-c, respectively.

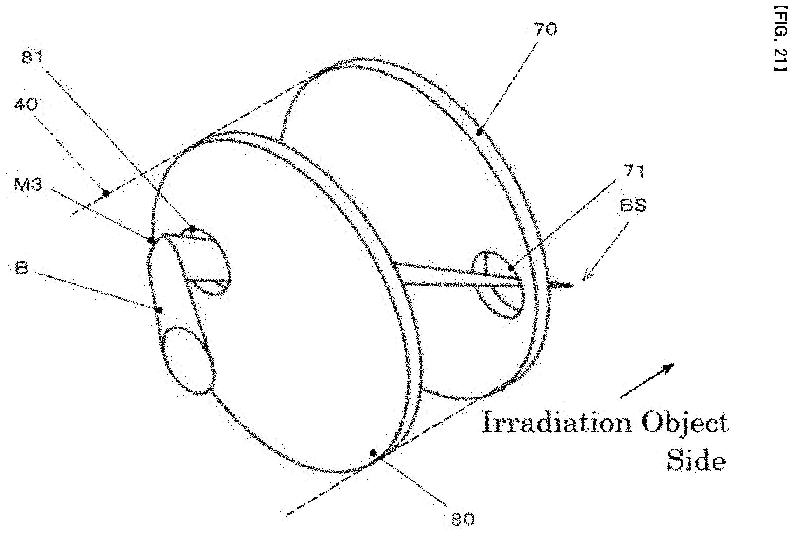

FIG. 21 is a perspective view around the protective member of the 11th embodiment.

In the 11th embodiment, the beam B emitted from the focus lens 10 is deflected by a wedge prism or a mirror (not shown) so as to be skewed toward an outer diameter side of the rotary cylinder 40. And thereafter, by the mirror M3 rotated together with the rotary cylinder 40, the beam is deflected again so that the angular position of the beam spot BS around the rotation center axis of the rotary cylinder 40 is to be opposite to the mirror M3 side.

In the 11th embodiment, a protective member 70 and a protective member 80 similar to those of the 2nd embodiment are provided.

The optical axis of the beam B reflected and emitted by the mirror M3 is arranged so as to intersect the rotation center axis of the rotary cylinder 40 at a space between the protective member 70 and the protective member 80.

For this reason, a position around the central axis of rotation of the aperture 81 of the protective member 80, is disposed on the side of the mirror M3. And a position around the central axis of rotation of an aperture 71 of the protective member 70 is disposed on the side opposite to the aperture 81 side.

According to the 11th embodiment described above, even when the distance from the focus lens 10 to the irradiation object is short, it is possible to secure a space between the protection member 70 and the protection member 80 while securing an optical path length of the beam B, and to suppress intrusion of foreign substances from the irradiation object side.

<12th embodiment>

Next, the 12th embodiment of a laser irradiation apparatus to which the present invention is applied will be described.

FIG. 22s are 3 sides views around the protective member in the laser irradiation apparatus according to the 12th embodiment.

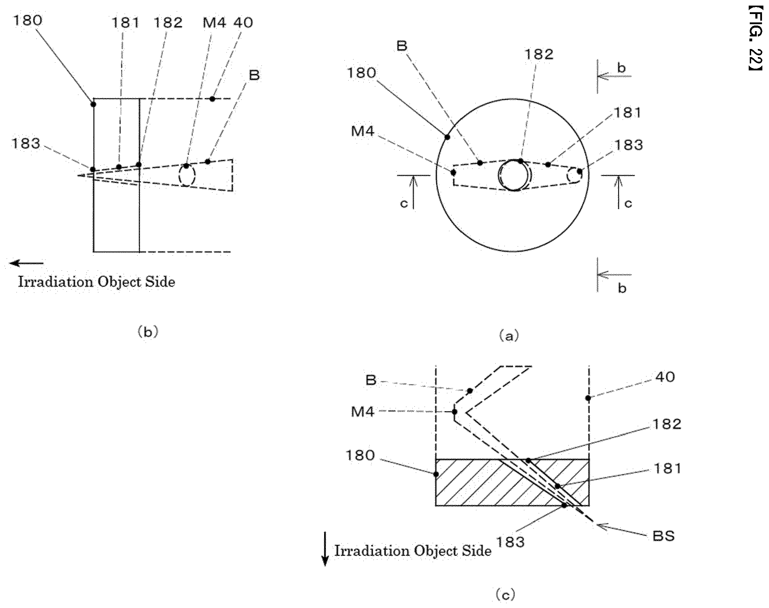

FIG. 22(a) is a view of the rotary cylinder 40 seen from the direction of the rotation center axis.

FIG. 22 (b) is a view seen from the arrow b-b of FIG. 22 (a) and FIG. 22 (c) is a sectional view seen from the arrow c-c of FIG. 22 (a).

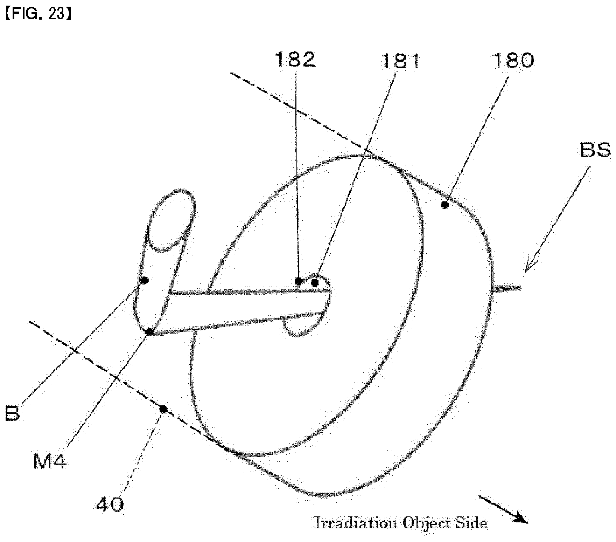

FIG. 23 is a perspective view around the protective member of the 12th embodiment.

In the 12th embodiment, the beam B emitted from the focus lens 10 is deflected by a wedge prism or a mirror (not shown) so as to be skewed toward the outer diameter side of the rotary cylinder 40. And thereafter, by the mirror M4 rotated together with the rotary cylinder 40, the beam is deflected again so that the angular position of the beam spot BS around the rotation center axis of the rotary cylinder 40 is to be opposite to the mirror M4 side.

The protective member 180 of the 12th embodiment is formed in a disk shape along a plane orthogonal to the rotation center axis of the rotary cylinder 40, for example, and is provided to close the rotary cylinder 40 at an end portion on the irradiation object side of the rotary cylinder 40.

The thickness D of the protective member 180 is, for example, when the speed of the foreign substances is v (m / s), the rotational speed of the rotary cylinder 40 is n (rpm), the average eccentric size of the opening is R (mm), and the diameter of the aperture opening is d (mm), preferable to be bigger than the below.

$$D = 60 \, dv \, / \, (2 \, \pi \, Rn).$$

For example, D is preferably 2mm or larger, more preferably 5mm or larger.

A beam path 181 through which the beam B passes is formed in the protective member 180.

The beam path 181 has, at both ends thereof, an incident side aperture 182 formed on a surface portion of the protective member 180 on the side of the mirror M4 and an exit side aperture 183 formed on a surface portion on the side of the irradiation object.

The incident side aperture 182 is disposed at a central portion of the protection member 180. Note that the incident side aperture 182 may be arranged eccentrically on the same side with or on the opposite side to the exit side aperture 183.

The exit aperture 183 is arranged eccentrically to the outer diameter side from the center of the protective member 180 so that a position of the rotation cylinder 40 around the rotation center axis is opposite to the mirror M4 side.

The beam B obliquely enters to the incident side aperture 182 of the beam path 181.

In accordance with a change in diameter of the beam B converging toward the beam spot BS, the exit side aperture 183 has a smaller diameter with respect to the entrance aperture 182.

The beam path 181 extends linearly between the entrance aperture 182 and the exit side aperture 183, and is formed in a tapered shape in which the inner diameter of the beam path is continuously changed.

The center axis of the beam path 181 is obliquely arranged so as to be inclined with respect to a plane orthogonal to the rotation center axis of the protection member 180.

According to the 12th embodiment described above, even in a case where particulate foreign substances scatters from the irradiation object side and enters the beam passage 181 from the emission side aperture 183, the substances are decelerated by colliding with the inner peripheral surface of the beam passage 181 by the rotation of the protective member 180.

When the speed of the foreign substances become zero, by the centrifugal force generated by the rotation of the protective member 180, the foreign substances return through the beam passage 181 and is discharged to the outside from the exit side opening 183.

Thus, it is possible to further enhance the effect of suppressing foreign substances intrusion.

<13th embodiment>

Next, the 13th embodiment of a laser irradiation apparatus to which the present invention is applied will be described.

FIG.s 24 are 3 sides views around the protective member in the laser irradiation apparatus according to the 13th embodiment.

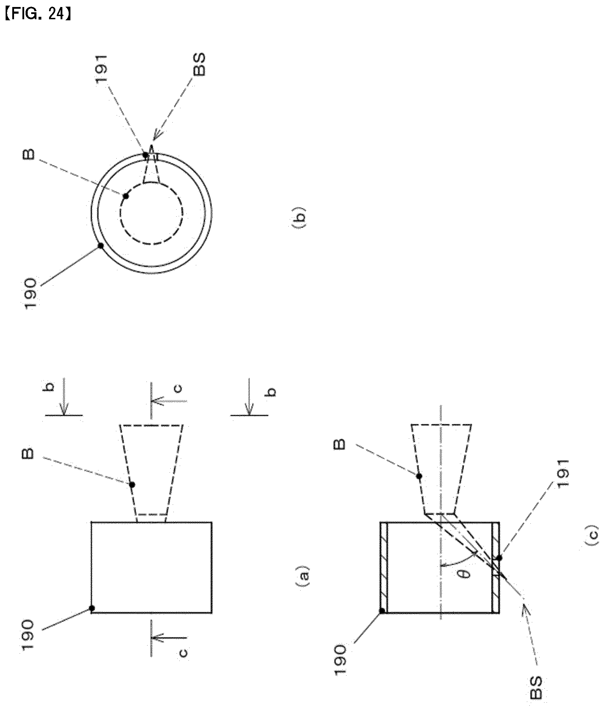

FIG. 24 (a) is a view seen from the radial direction of the rotary cylinder.

FIG. 24(b) is a view seen from an arrow b-b of FIG. 24(a).

FIG. 24 (c) is a sectional view seen from an arrow c-c of FIG. 24 (a).

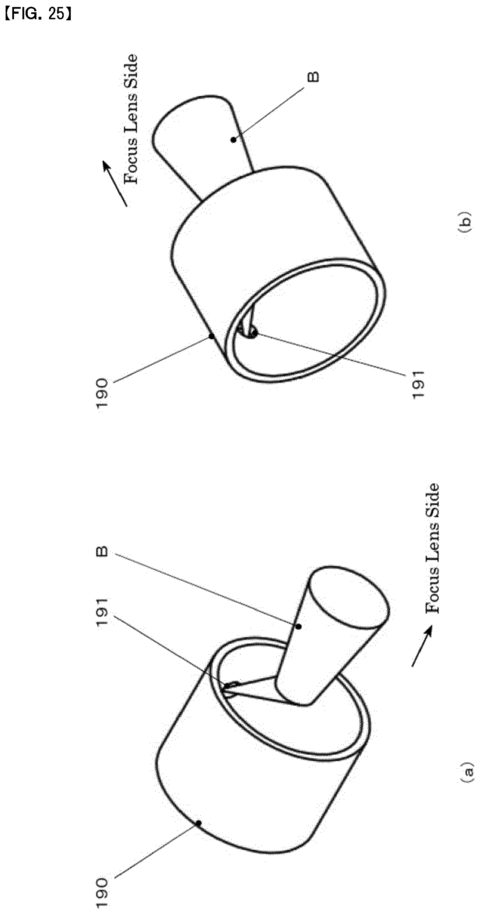

FIG. 25 is a perspective view around the protective member.

FIG. S. 25 (a) and 25 (b) are perspective views seen from the incident side of the beam B (focus lens side) and the opposite side thereof, respectively.

In the laser irradiation apparatus of the 13th embodiment, a beam B is irradiated on an inner peripheral surface of a pipe, for example, in a state of the apparatus being inserted into the cylindrical pipe, and foreign substances adhered to the pipe surface is cleaned.

The protective member 190 is formed in a cylindrical shape and is supported so as to be rotatable around a rotation center axis disposed along a central axis thereof.

In the 13th embodiment, the beam B is deflected by a deflecting member, such as a mirror or a wedge prism, not shown.

The deflection angle $\theta$ (see FIG. 24(c)) of the beam B by the deflection member is, for example, greater than 0 ° and less than 180 °.

The deflection member and the protection member 190 are synchronously rotated by an actuator such as an electric motor (not shown). For example, the deflection member and the protection member 190 may relatively be fixed directly or indirectly.

An aperture 191 through which the beam B passes is formed on the peripheral surface of the protective member 190.

The aperture 191 is disposed facing to an inner peripheral surface of a cylindrical member which is an object to be treated, and rotates together with the protective member 190 following the rotation of the beam B.

According to the 13th embodiment described above, in the laser irradiation apparatus that irradiates the inner peripheral surface of the pipe or the like, it is possible to appropriately suppress the foreign substances scattered from the irradiation object side from entering to the optical system side such as the focus lens.

<14th embodiment>

Next, the 14th embodiment of a laser irradiation apparatus to which the present invention is applied will be described.

FIG.s 26 are 4 sides views around the protective member in the laser irradiation apparatus according to the 14th embodiment.

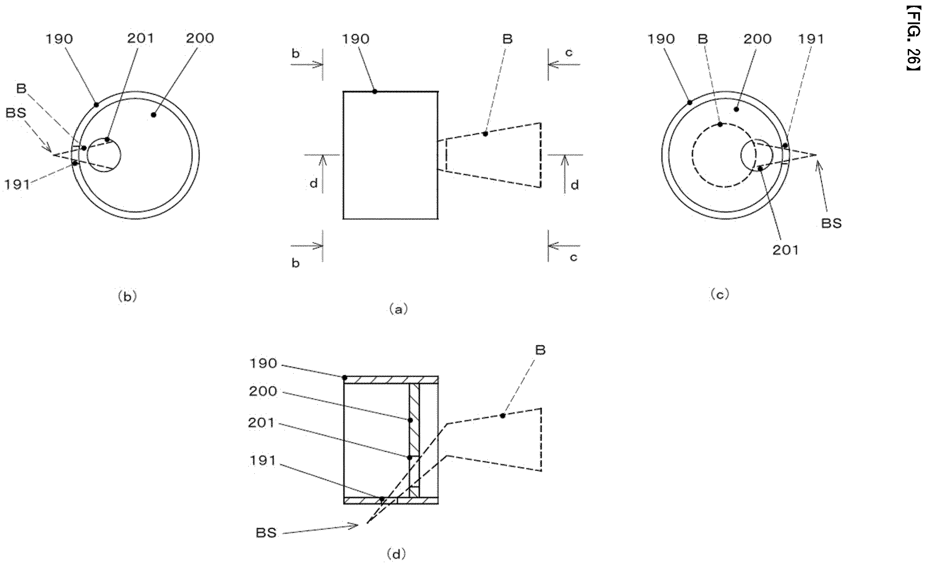

FIG. 26 (a) is a view seen from the radial direction of the rotary cylinder.

FIG. S. 26 (b) and 26 (c) are views seen from the arrow b-b of FIG. 24 (a) and the arrow c-c, respectively.

FIG. 26 (d) is a sectional view seen from the arrow d-d of FIG. 26 (a).

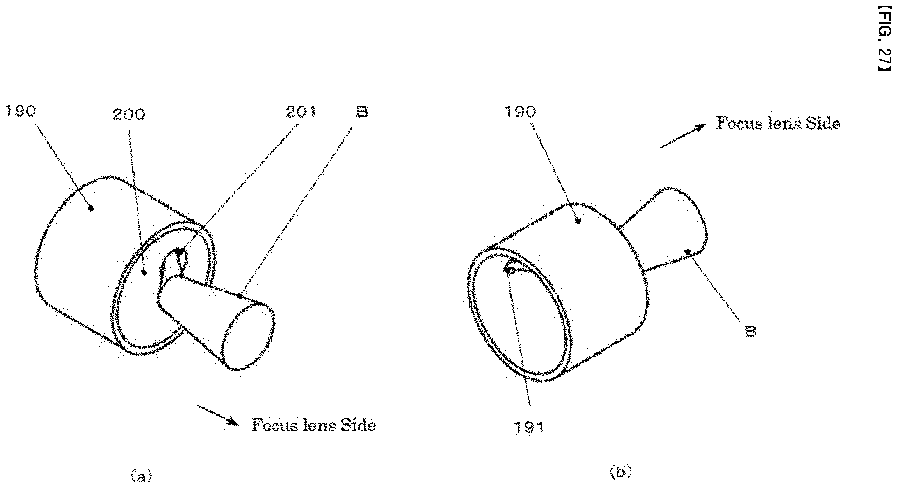

FIG. 27 is a perspective view around the protective member.

FIG. S. 27 (a) and 27 (b) are perspective views seen from the incident side and the opposite side of the beam B, respectively.

In the 14th embodiment, a protective member 200 to be described below is added to the inner diameter side of the protective member 190 of the 13th embodiment.

The protective member 200 is formed in a disc shape along a plane orthogonal to the rotation center axis of the protective member 190, and is provided so as to close the inside of the protective member 190.

The protection member 200 is disposed, in the rotation center axis direction of the protective member 190, between the end of the mirror side (the incident side of the beam B) and the aperture 191.

An aperture 201 through which the beam B passes is formed in the protective member 200.

The aperture 201 is provided eccentrically from the center of the protective member 200 in proportion to a size of eccentricity of the beam B at a position where the protective member 200 is provided.

The aperture 201 rotates together with the protective member 190 and the protective member 200 and moves following the rotation of the beam B.

According to the 14th embodiment described above, in addition to the effects similar to those of the 13th embodiment, it is possible to further enhance suppressing effect of the foreign substance intrusion by providing the protective member 200.

<15th embodiment>

Next, the 15th embodiment of a laser irradiation apparatus to which the present invention is applied will be described.

FIG.s 28 are 3 sides views around the protective member in the laser irradiation apparatus according to the 15th embodiment.

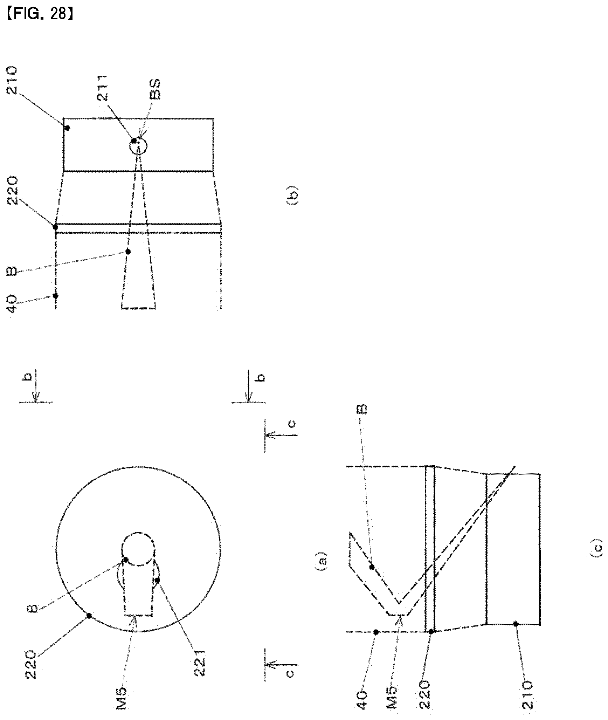

FIG. 28(a) is a view seen from an incident side in the rotation center axis direction of the protective member.

FIG.S. 28 (b) and 28 (c) are views seen from the arrow b-b of FIG. 28 (a) and the arrow c-c, respectively.

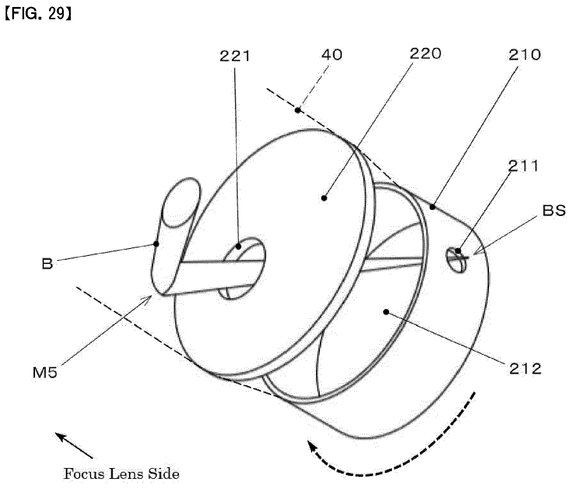

FIG. 29 is a perspective view of the protective member of the 15th embodiment, and is a view showing a state viewed from the incident side (focus lens side).

In the laser irradiation apparatus of the 15th embodiment, a beam B is irradiated on an inner peripheral surface of a pipe, for example, in a state of the apparatus being inserted into a cylindrical pipe, and foreign substances adhered to the pipe surface are cleaned.

In the 15th embodiment, the beam B emitted from the focus lens 10 is deflected by a wedge prism or a mirror (not shown) so as to be skewed toward the outer diameter side of the rotary cylinder 40. And thereafter, by the mirror M5 rotated together with the rotary cylinder 40, the beam is deflected again so that the angular position of the beam spot BS around the rotation center axis of the rotary cylinder 40 is to be opposite to the mirror M5 side.

The laser irradiation apparatus of the 15th embodiment has a protective member 210 and a protective member 220.

The protective member 210 is formed in a cylindrical shape concentric with the rotary cylinder 40, and is attached to a protruding end of the rotary cylinder 40 (an end opposite to the focus lens 10 side).

An aperture 211 through which the beam B passes is formed on the peripheral surface of the protective member 210.

The aperture 211 is disposed facing to an inner peripheral surface of a cylindrical member which is an object to be treated, and rotates together with the protective member 210 following the rotation of the beam B.

An end of the protective member 210 opposite to the side of the mirror M5 is closed by an end surface 212.

The protective member 220 is formed in a disk shape along a plane orthogonal to the rotation center axis of the rotary cylinder 40, and is provided so as to close the inside of the rotary cylinder 40.

The protection member 220 is disposed between the mirror M5 and the protection member 210 in the rotation center axis direction of the rotation cylinder 40.

An aperture 221 through which the beam B passes is formed in the protective member 220.

The aperture 221 is arranged eccentrically to the mirror M5 side in relation to the center of the protective member 220.

Like the aperture 211, the aperture 221 rotates around the rotation center axis of the rotation center shaft 40 following the rotation of the beam B.

According to the 15th embodiment described above, by providing the cylindrical protective member 210 and the disk-shaped protective member 220 in combination, it is possible to further enhance the suppressing effect against the foreign substance intrusion.

<16th embodiment>

Next, the 16th embodiment of a laser irradiation apparatus to which the present invention is applied will be described.

FIG. 30s are 3 sides views of around the protective member in the laser irradiation apparatus according to the 16th embodiment.

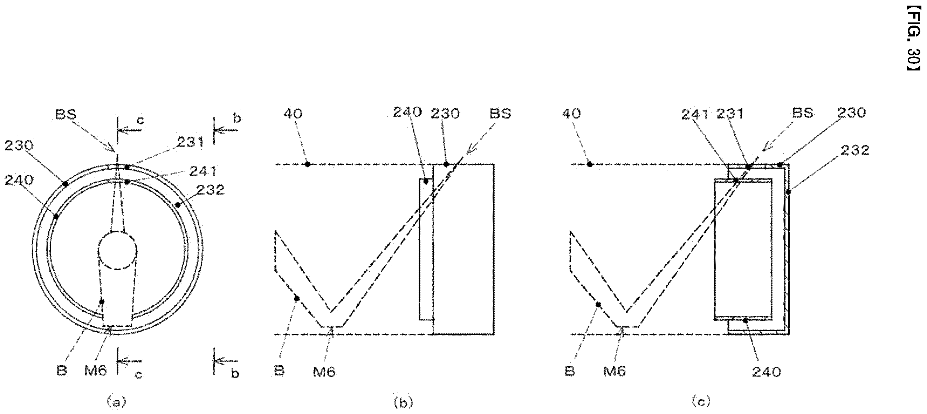

FIG. 30(a) is a view seen from the focus lens side in the direction of the rotation center of the rotary cylinder 40.

FIG. 30 (b) is a view seen from the arrow b-b of FIG. 30 (a) and FIG. 30 (c) is a sectional view seen from the arrow c-c of FIG. 30 (a).

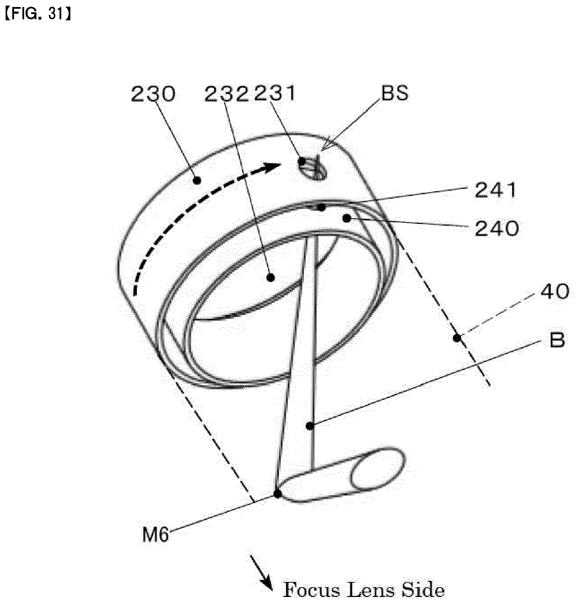

FIG. 31 is a perspective view around the protective member of the 16th embodiment.

In the laser irradiation apparatus of the 16th embodiment, a beam B is irradiated on an inner peripheral surface of a pipe, for example, in a state of the apparatus being inserted into a cylindrical pipe, and foreign substances adhered to the pipe surface is cleaned.

In the 16th embodiment, the beam B emitted from the focus lens 10 is deflected by a wedge prism or a mirror (not shown) so as to be skewed toward an outer diameter side of the rotary cylinder 40. And thereafter, by the mirror M6 rotated together with the rotary cylinder 40, the beam is deflected again so that the angular position of the beam spot BS around the rotation center axis of the rotary cylinder 40 is to be opposite to the mirror M6 side.

The protective member of the 16th embodiment includes an outer protective member 230 and an inner protective member 240.

The outer protective member 230 and the body portion of the inner protective member 240 are formed in a cylindrical shape and arranged concentrically with the rotary cylinder 40.

The outer protective member 230 is attached to an end of the rotary cylinder 40 opposite to the focus lens 10.

The inner protective member 240 is inserted into the inner diameter side of the outer protective member 230.

The outer protective member 230 and the inner protective member 240 are fixed to the rotary cylinder 40 and rotate together with the rotary cylinder 40 in synchronization with the rotation of the beam B.

Apertures 231, 241 through which the beam B passes are formed in the peripheral surface portions of the outer protective member 230 and the inner protective member 240, respectively.

The aperture 231 of the outer protective member 230 is disposed facing to the inner peripheral surface of the cylindrical member which is an object to be treated and rotates together with the protective member 230 following the rotation of the beam B.

An outer peripheral surface of the inner protective member 240 is positioned to face to an inner peripheral surface of the outer protective member 230 at a distance in a radial direction.

An aperture 241 of the inner protective member 240 is disposed facing to an aperture 231 of the outer protective member 230.

An end of the outer protective member 230 opposite to the focus lens 10 is closed by an end surface 232.

In the 16th embodiment, the beam B reflected by the mirror M 6 sequentially passes through the apertures 241 and 231, and converges on the beam spot BS on the outer diameter side of the outer protective member 230.

According to the 16th embodiment described above, by forming the protection member in a double structure in the radial direction, it is possible to further enhance the effect of suppressing the intrusion of foreign substances.

<17th embodiment>

Next, the 17th embodiment of a laser irradiation apparatus to which the present invention is applied will be described.

FIG.s 32 are 3 sides views around the protective member in the laser irradiation apparatus according to the 17th embodiment.

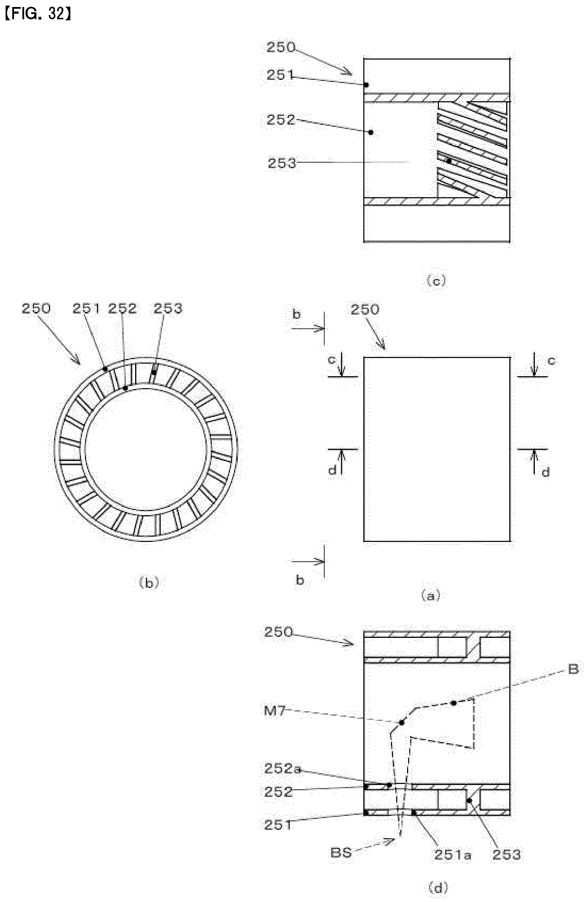

FIG. 32(a) is a view seen from a direction perpendicular to an optical axis direction of a beam incident on a protective member.

FIG. 32 (b) is a view seen from an arrow b-b of FIG. 32 (a), and FIG. 32 (c) and FIG. 32 (d) are sectional views seen from an arrow c-c of FIG. 32 (a) and an arrow d-d of FIG. 32 (a).

The protective member 250 of the 17th embodiment is supported so as to be rotatable around a rotation center axis substantially coinciding with an optical axis of an incident beam B, and is rotationally driven by an actuator such as an electric motor (not shown).

The protective member 250 includes an outer cylinder 251, an inner cylinder 252, a blade 253, and etc..

Each of the outer cylinder 251 and the inner cylinder 252 is formed in a cylindrical shape concentric with the rotation center axis.

The inner cylinder 252 is inserted into the inner diameter side of the outer cylinder 251, and the outer peripheral surface of the inner cylinder 252 is disposed facing the inner peripheral surface of the outer cylinder 251 at a distance in a radial direction.

The blades 253 are provided bridging between the inner peripheral surface of the outer cylinder 251 and the outer peripheral surface of the inner cylinder 252, and generate an air flow of an axial flow direction between the outer cylinder 251 and the inner cylinder 252 when the protective member 250 rotates.

The blades 253 are formed in a plate shape, for example, protruding from an outer peripheral surface of the inner cylinder 252 and is provided and distributed radially around a rotation center axis of the protective member 250.

The blades 253 are arranged to incline in relation to the rotation center axis direction of the protective member 250.

The outer cylinder 251, the inner cylinder 252, and the blades 253 are integrally formed of, e.g., a resin material.

Inside the protective member 250, a mirror M7 is provided which deflects the beam B incident along the rotation center axis direction of the protective member 250 by, for example, about 90 °.

The mirror M7 is fixed to the inner cylinder 252 via a stay (not shown) and rotates together with the inner cylinder 252.

A beam B reflected from the mirror M7 passes through an aperture 252a formed in an inner cylinder 252 and an aperture 251a formed in an outer cylinder 251 in sequence, and is irradiated on a surface of a cylindrical inner surface of a pipe or the like as an object to be treated.

According to the 17th embodiment described above, in addition to the effects similar to those of the 16th embodiment described above, it is possible to generate a purge gas flow (an air flow or the like) for removing foreign substances such as dust and the like, and it is not necessary to provide a particular air flow forming device or the like, and it is possible to simplify the configuration of the apparatus 250.

<18th embodiment>

Next, the 18th embodiment of a laser irradiation apparatus to which the present invention is applied will be described.

FIG.s 34 are 3 sides views around the protective member in the laser irradiation apparatus according to the 18th embodiment.

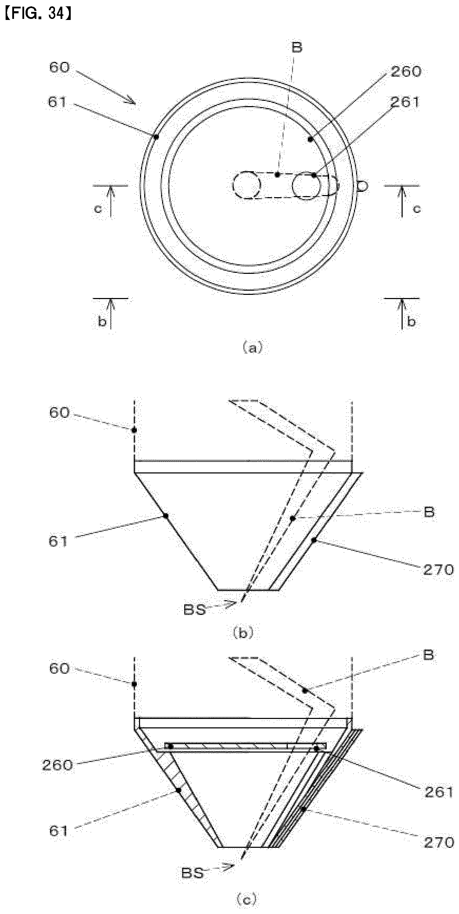

FIG. 34(a) is a view seen from the focus lens side in the direction of the rotation center of the rotary cylinder 40.

FIG. s 34 (b) and 34 (c) are a view seen from an arrow b-b of FIG. 34 (a) and a cross-sectional view seen from an arrow c-c of FIG. 34 (a), respectively.

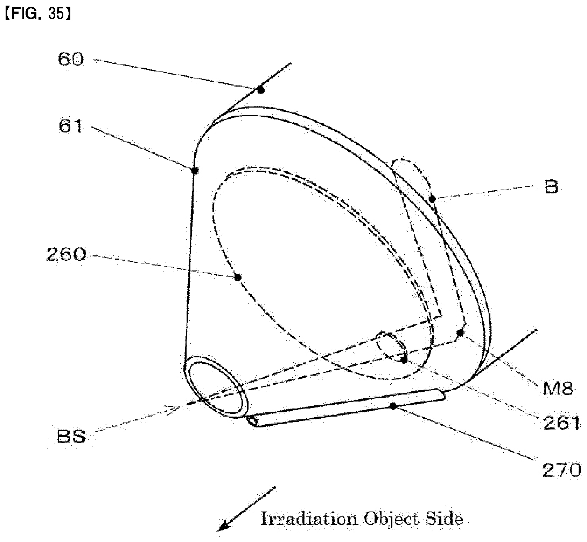

FIG. 35 is a perspective view around the protective member of the 18th embodiment.

In the 18th embodiment, the beam B emitted from the focus lens 10 is deflected by a wedge prism or a mirror (not shown) so as to be skewed toward an outer diameter side. And thereafter, by the mirror M8 rotated together with the wedge prism etc., the beam is deflected again so that the angular position of the beam spot BS around the rotation center axis is to be opposite to the mirror M8 side.

The protective member 260 of the 18th embodiment is provided inside the nozzle portion 61 of the housing 60.

The nozzle portion 61 is fixed to the housing 60.

The protective member 260 is formed in a disk shape and rotates relative to the nozzle portion 61 together with the rotation center axis of the optical system.

An aperture 261 through which the beam B passes is formed in the protective member 260.

The aperture 261 is arranged eccentrically from the central portion of the protective member 260 and moves following the rotation of the beam B.

An assist gas supply pipe 270 is provided on an outer peripheral surface portion of the nozzle portion 61.

The assist gas supply pipe 270 spouts the various kinds of gases containing, assist gas, such as oxygen, or purge gas such as air and inactive gas (nitrogen gas, argon gas, etc.), according to a purpose as assist gas, purge gas, etc. which remove foreign substances from an irradiated part.

The assist gas supply pipe 270 is formed in a circular tubular shape, for example, and is provided along an outer peripheral surface of the nozzle portion 61.

A gas supply means, such as a compressor, a gas container, or the like, which is not shown in the drawing, is connected to an end of the assist gas supply pipe 270, which is opposite to an irradiation object side.

An end of the assist gas supply pipe 270 on the side of the irradiation object is provided adjacent to an opening at the tip of the nozzle portion 61, and a purge gas, an assist gas, and the like are ejected from the opening toward the irradiation object side.

According to the 18th embodiment described above, the assist gas supply pipe 270 is provided on the outer peripheral surface of the nozzle portion 61, and by injecting a purge gas such as an argon gas to the irradiation object side, it is possible to further suppress intrusion of foreign substances from the opening of the tip end of the nozzle portion 61 and to further enhance the effect of suppressing foreign substance intrusion. In addition, it is also possible to remove foreign substances (purging) at the laser irradiation site.

Further, if an assist gas such as oxygen is supplied from the assist gas supply pipe 270, it can be utilized as a pitting corrosion head dealing with relatively deep rusts or a cutting head.

(Modification)

The present invention is not limited to the embodiments described above, and various modifications and changes may be made without departing from the scope of the present invention.

(1) The configuration of the laser irradiation apparatus and the protection member is not limited to the above-described embodiments, and can be changed as appropriate.

For example, the configuration of the optical system, the configuration of the drive unit for driving the deflection optical system, and the protective member can be changed as appropriate. For example, in the 1st embodiment and the like, laser light is collimated using a collimating lens, but the present invention is not limited thereto, and an optical system that is not collimated and an optical system that does not have a collimating lens may be used.

(2) In the 1st embodiment and the like, a wedge prism that gives a deflection angle to a beam is used as a deflection optical system, but, for example, a configuration in which an optical axis of a beam is rotated in a state of being shifted in parallel from a rotation center axis may be used.

(3) In the 1st embodiment and the like, laser light oscillated by a laser oscillator is transmitted to an irradiation optical system (irradiation head) by, for example, a fiber, but the present invention is not limited thereto, and, for example, a mirror, a lens, or the like may be used, or an emission optical system may be directly connected to a laser oscillator.

(4) In the 1st embodiment and the like, although the rotary cylinder is formed concentrically with the optical axis of the focus lens 10 as an example, the rotary cylinder may be arranged eccentrically to the optical axis.

(5) In the 6th embodiment, a galvano scanner having a pair of mirrors is used as a part of an emission optical system, but instead of this, one having a single mirror or one having 3 or more mirrors, for example, may be used.

(6) In the 7th and the 8th embodiments, 2 or 3 slits, for example, are provided on a rotating plate, but the present invention is not limited thereto, and a configuration having 4 or more slits, for example, may be used.

(7) Although each of the embodiments has been described as a laser irradiation apparatus, the invention is also applicable as a laser irradiation method using the laser irradiation apparatus.

[Explanation of numerals]

| | | | |
|---|---|---|---|
| 1 | irradiation head | 10 | focusing lens |
| 20 | wedge prism | 30 | protective glass |
| 40 | rotating cylinder | 50 | motor |
| 60 | housing | 61 | nozzle portion |
| 70 | protective member | 71 | aperture |
| 80 | protective member | 81 | aperture |
| 110 | protective member | 111 | fixed plate |
| 111a | slit | 112 | rotating plate |
| 112a | slit | | |
| 120 | protective member | 121 | slit |
| 130 | protective member | 131 | fixed plate |
| 131a | slit | 132 | rotating plate |
| 132a | slit | 133 | rotating plate |
| 133a | slit | | |
| 140 | protective member | 141 | fixed plate |
| 141a | slit | 142 | rotating plate |
| 142a | slit | 143 | rotating plate |
| 143a | slit | | |
| 150 | polygon mirror | 151 | mirror |
| 160 | protective member | 161 | slit |
| 170 | protective member | 171 | aperture |
| 180 | protective member | 181 | beam path |
| 182 | incident side aperture | 183 | exit side aperture |
| 190 | protective member | 191 | aperture |
| 200 | protective member | 201 | aperture |
| 210 | protective member | 211 | aperture |
| 220 | protective member | 221 | aperture |
| 230 | outer protective member | 231 | aperture |
| 240 | inner protective member | 241 | aperture |
| 250 | protective member | 251 | outer cylinder |
| 251a | aperture | 252 | inner cylinder |
| 252a | aperture | 253 | blades |
| 260 | protective member | 261 | aperture |
| 270 | assist gas supply pipe | | |
| M1-M8 | mirror | | |

Claims

1. A laser irradiation apparatus **characterized in that** the apparatus comprising,

an emission optical system which forms a beam by condensing or converging a laser light generated by a laser oscillator at a predetermined beam spot, and which continuously changes at least one of an irradiation direction and an optical path position of the beam, and
a protective member which is provided between the emission optical system and the beam spot, and which suppresses an arrival of foreign substances scattered from the irradiation object side to the emission optical system, and which has an aperture through which the beam passes, and which moves in connection with a change in at least one of an irradiation direction and an optical path position of the beam so that a position of the aperture is positioned on a path of the beam.

2. A laser irradiation apparatus according to claim 1, wherein

   the emission optical system has a rotary optical system which gives at least one of a deflection angle and a shift amount to the beam, and which rotates around a predetermined rotation center axis so as to turn the beam spot, and
   the protective member is fixed to a holding member which holds the rotary optical system.

3. A laser irradiation apparatus according to claim 2, wherein
   the rotating optical system has a wedge prism which gives a deflection angle to the beam.

4. A laser irradiation apparatus according to claim 2 or 3, wherein
   the rotating optical system has a mirror which is arranged to incline relative to an incident direction of the beam.

5. A laser irradiation apparatus according to claim 4, wherein
   the mirror includes a 1st mirror and a 2nd mirror on which the beam is sequentially reflected.

6. A laser irradiation apparatus according to claim 5, wherein
   the position of the 2nd mirror in the direction along the optical axis of the beam incident on the irradiation object is located at a far side from the irradiation object than the 1st mirror.

7. A laser irradiation apparatus according to claim 2 to 6, wherein
   the protective member has a surface portion formed along a direction crossing the rotation central axis, and the aperture is provided on the surface portion.

8. A laser irradiation apparatus according to any one of claims 2 to 6, wherein
   the protective member is formed as a cylindrical body arranged along the rotation center axis, and the aperture is provided on a peripheral surface of the cylindrical body.

9. A laser irradiation apparatus according to claim 1, wherein

   the emission optical system has a polygon mirror which rotates around a predetermined rotation center axis and has a plurality of mirrors arranged in a circumferential direction, and
   the protective member is rotated in connection with the polygon mirror and has a plurality of apertures through which the beams reflected by the plurality of mirrors pass.

10. A laser irradiation apparatus according to claim 1, wherein

    the emission optical system has a galvano scanner including a mirror oscillating around a predetermined rotation center axis,
    the protective member is formed as a cylindrical body which rotates around a central axis in synchronization with the oscillation of the beam, and
    the aperture is formed on a peripheral surface of the cylindrical body.

11. A laser irradiation apparatus according to claim 10, wherein

    the aperture includes a 1st aperture through which the beam passes as it oscillates in a 1st direction, and a 2nd aperture through which the beam passes as it oscillates in a 2nd direction opposite to the 1st direction,
    the 1st aperture is formed in a slit shape extending in a cylinder axial direction from one end of the cylindrical body, and
    the 2nd aperture is formed in a slit shape extending from the other end of the cylindrical body in the axial direction of the cylinder.

12. A laser irradiation apparatus according to claim 1, wherein

    the emission optical system has a galvano scanner including a mirror oscillating around a predetermined rotation center axis,

the protective member has a fixed portion having a 1st slit extending along a oscillating direction of the beam, and a rotating portion which rotates relative to the fixed portion synchronizing with the oscillation of the beam, and which has a 2nd slit extending in the direction which intersects the 1st slit when seen from the incident direction of a beam.

13. A laser irradiation apparatus according to any one of claims 1 to 11, wherein
   the protective member has an airflow generating portion for generating an airflow for discharging foreign substances during operation thereof.

14. A laser irradiation apparatus according to any one of claims 1 to 12, wherein
   a plurality of protective members are provided along an optical path of the beam.

15. A laser irradiation apparatus according to any one of claims 1 to 12, wherein
   3 or more of the protective members are provided along the optical path of the beam, and a distance between the protective members along the optical path of the beam is sequentially changed.

16. A laser irradiation apparatus according to claim 15, wherein
   a distance between the protective members is set so as to be gradually narrowed as approaching from the side of the irradiation object toward the side of the emission optical system.

17. A laser irradiation apparatus according to any one of claims 1 to 16, wherein

   the apparatus has a purge gas introducing part for introducing a purge gas into a region of the protective member opposite to the irradiation object side, and
   the purge gas is flowed out from the aperture of the protective member toward the irradiation object side.

18. A laser irradiation apparatus according to any one of claims 1 to 16, wherein
   a purge gas supply part is provided adjacent to a nozzle part from which the beam is emitted, for supplying a purge gas to the irradiation object side.

19. A laser irradiation apparatus according to claim 17 or 18, wherein
   as the purge gas, a gas containing an inert gas as main component is used.

【FIG. 1】

【FIG. 2】

Irradiation Object Side

【FIG. 3】

【FIG. 4】

Irradiation Object Side

【FIG. 5】

Irradiation Object Side

【FIG. 6】

(a)

(b)

【FIG. 7】

【FIG. 8】

(a)

(b)

【FIG. 9】

【FIG. 10】

[FIG. 11]

EP 4 035 821 A1

(a)

(b)

(c)

【FIG. 12】

【FIG. 13】

【FIG. 14】

【FIG. 15】

【FIG. 16】

【FIG. 17】

【FIG. 18】

70 71    81 80   170 171    40         M2

BS

Irradiation object
Side

b

M1          B          b

(a)

BS      70    71    81  80  170 171 40      M1      B

(b)

【FIG. 19】

(a)

(b)

【FIG. 20】

EP 4 035 821 A1

【FIG. 21】

44

【FIG. 22】

(a)

(b)

Irradiation Object Side

(c)

Irradiation Object Side

【FIG. 23】

182  181  180

BS

B

M4

40

Irradiation Object Side

【FIG. 24】

(b)

(a)

(c)

【FIG. 25】

【FIG. 26】

【FIG. 27】

[FIG. 28]

(a)

(b)

(c)

【FIG. 29】

Focus Lens Side

[FIG. 30]

EP 4 035 821 A1

(a)　　　　　　　　　　(b)　　　　　　　　　　(c)

【FIG. 31】

【FIG. 32】

(c)

(b)

(a)

(d)

【FIG. 33】

(b)

Focus Lens Side

250
251a
252a
B
251
252

(a)

Focus Lens Side

251
252
253
250

56

【FIG. 34】

(a)

(b)

(c)

【FIG. 35】

Irradiation Object Side

## INTERNATIONAL SEARCH REPORT

| International application No. |
| --- |
| PCT/JP2020/032821 |

**A. CLASSIFICATION OF SUBJECT MATTER**
Int.Cl. B23K26/064(2014.01)i, B23K26/066(2014.01)i, B23K26/082(2014.01)i,
B23K26/16(2006.01)i
FI: B23K26/16, B23K26/066, B23K26/082, B23K26/064G
According to International Patent Classification (IPC) or to both national classification and IPC

**B. FIELDS SEARCHED**

Minimum documentation searched (classification system followed by classification symbols)
Int.Cl. B23K26/00-26/70

Documentation searched other than minimum documentation to the extent that such documents are included in the fields searched
Published examined utility model applications of Japan       1922-1996
Published unexamined utility model applications of Japan     1971-2020
Registered utility model specifications of Japan             1996-2020
Published registered utility model applications of Japan     1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br><br>A | WO 2013/133415 A1 (TOYOKOH CO., LTD.) 12 September 2013 (2013-09-12), paragraphs [0032]-[0186], fig. 1-20 | 1-4, 7, 13, 18-19<br>5-6, 8-12, 14-17 |
| A | WO 2018/066286 A1 (NIKON CORPORATION) 12 April 2018 (2018-04-12), paragraphs [0009]-[0093], fig. 1-18 | 1-19 |
| A | JP 9-47888 A (KOIKE SANSO KOGYO CO., LTD.) 18 February 1997 (1997-02-18), paragraphs [0016]-[0060], fig. 1-5 | 1-19 |
| A | CN 206981344 U (CHANGCHUN DEXIN PHOTOELECTRIC TECH CO LTD.), paragraphs [0022]-[0032], fig. 1-4 | 1-19 |

☐ Further documents are listed in the continuation of Box C.          ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 21 October 2020 | 02 November 2020 |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
| --- | --- |

Form PCT/ISA/210 (second sheet) (January 2015)

INTERNATIONAL SEARCH REPORT
Information on patent family members

International application No.

PCT/JP2020/032821

| | | |
|---|---|---|
| WO 2013/133415 A1 | 12 September 2013 | US 2015/0076125 A1<br>paragraphs [0052]-[0222], fig. 1-20<br>EP 2823929 A1 |
| WO 2018/066286 A1 | 12 April 2018 | KR 10-2019-0057372 A<br>CN 109791280 A |
| JP 9-47888 A | 18 February 1997 | (Family: none) |
| CN 206981344 U | | (Family: none) |

Form PCT/ISA/210 (patent family annex) (January 2015)

**EP 4 035 821 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5574354 B

- WO 2016009978 A